# FASCICULE DE BREVET EUROPEEN

(11) **EP 0 730 706 B1**
(45) Date de publication et mention de la délivrance du brevet: **27.08.1997**
(21) Numéro de dépôt: 95902153.6
(22) Date de dépôt: 18.11.1994
(51) Int. Cl.: F02B 29/08

(54) **PROCEDE POUR AMELIORER LE FONCTIONNEMENT D'UN MOTEUR THERMIQUE SURALIMENTE ET BALAYE AVEC DE L'AIR, ET MOTEUR THERMIQUE AGENCE POUR LA MISE EN OEUVRE DU PROCEDE**
VERFAHREN ZUR BESSEREN FUNKTION EINER AUFGELADENEN BRENNKRAFTMASCHINE MIT LUFTSTRÖMUNG UND MOTORBAU ZUR REALISIERUNG DIESES VERFAHRENS
METHOD FOR IMPROVING THE OPERATION OF AN AIR-SCAVENGED SUPERCHARGED HEAT ENGINE, AND HEAT ENGINE THEREFOR

(30) Priorité: 22.11.1993 FR 9313922
(43) Date de publication de la demande: 11.09.1996
(73) Titulaire: CURTIL, Rémi, F-75017 Paris (FR)
(72) Inventeur: CURTIL, Rémi, F-75017 Paris (FR)
(74) Mandataire: Michardière, Bernard
(86) Numéro de dépôt international: FR9401348
(87) Numéro de publication internationale: WO9514853

(56) Documents cités:
- EP-A- 0 201 404
- CH-A- 435 860
- DE-A- 3 940 992
- FR-A- 1 030 063
- FR-A- 1 153 612
- FR-A- 2 271 393
- FR-A- 2 448 032

## Description

L'invention est relative à un procédé pour améliorer le fonctionnement d'un moteur thermique suralimenté, principalement par turbocompresseur, et balayé avec de l'air.

L'invention concerne plus spécialement les moteurs Diesel dans lesquels le balayage des cylindres est réalisé avec de l'air ; toutefois, l'invention peut s'appliquer également aux moteurs à essence (ou encore à gaz) avec injection directe d'essence (ou de gaz) dans le cylindre.

FR-A-2 448 032 concerne des moteurs Diesel suralimentés quatre temps à pression sensiblement constante dans le collecteur d'échappement. Selon ce document, l'utilisation de l'évolution naturelle de la relation entre la pression d'air de suralimentation et la contre-pression à l'échappement du cylindre s'appuie sur des profils de pression instantanée les plus constants possibles, en particulier dans le collecteur d'échappement, c'est-à-dire des profils présentant un degré de fluctuation de pression faible par rapport à la pression moyenne. Dans ce cas, on veille à ce que la pression instantanée maximale dans le collecteur d'échappement ne dépasse pas la pression de suralimentation de façon à ce que le balayage du cylindre durant la phase de croisement de soupape ne soit pas perturbé, à l'exception de très faibles charges où un léger contre-balayage peut être admis. Ce type de collecteur d'échappement à pression constante, bien connu sur les moteurs industriels de grande puissance, où un nombre élevé de cylindres sont regroupés dans un collecteur unique alimentant la turbine du turbocompresseur, connaît deux formes de réalisation :
- en utilisant un collecteur de très grand diamètre, voisin ou supérieur à l'alésage d'un cylindre,
- en interposant un convertisseur d'impulsion à la sortie de chacun des cylindres, freinant l'écoulement de la bouffée en transformant son énergie de pression en vitesse et permettant ainsi l'utilisation d'un collecteur de plus faible section où les fluctuations de pression instantanée sont suffisamment faibles pour ne pas perturber le balayage des différents cylindres regroupés sur le même collecteur.

Il a toutefois été envisagé (voir page 11, lignes 28-32) une mise en oeuvre des caractéristiques visées par FR-A-2 448 032 dans le cas de moteurs à impulsion ou "pulse converters" pour lesquels des variations de pression ou "bouffées" se produisent dans le collecteur d'échappement. Cette mise en oeuvre a été proposée pour les cas où les écarts, dans le temps, entre les bouffées sont suffisants. Autrement dit, dans l'application envisagée à un moteur présentant des bouffées dans son collecteur d'échappement, il est demandé d'utiliser les intervalles entre les bouffées pour éviter les perturbations créées par les variations de pression correspondant aux bouffées.

La présente invention, au contraire, suivant une approche totalement différente de celle de FR-A-2 448 032, vise à favoriser la présence de bouffées, c'est-à-dire de variations de pression sensibles, dans le collecteur d'échappement, et à utiliser ces bouffées pour provoquer une auto-suralimentation par effet de post-remplissage, avantageux surtout aux bas régimes, sans pour autant créer d'effet nuisible, en particulier un post-remplissage avec des gaz d'échappement, aux régimes plus élevés.

On sait qu'une suralimentation par turbocompresseur, efficace sur toute la plage de régimes du moteur, est d'autant plus délicate qu'il s'agit d'un moteur présentant une plage de régimes importante et de petite puissance, par exemple un moteur de type automobile. En effet, les turbocompresseurs, pour de tels moteurs, présentent un rendement faible parce qu'ils sont de petite taille.

Pour ce type de moteurs (automobiles ou similaires en taille), en vue de réduire l'inconvénient de manque de pression d'air de suralimentation à bas régime, deux techniques ont été développées :
- la première consiste à utiliser une soupape de dérivation (généralement appelée "waste-gate") à l'admission de la turbine qui s'ouvre au-dessus d'un certain seuil de pression de suralimentation de façon à ce que cette pression n'excède pas un seuil prédéterminé ; cette technique permet d'utiliser des turbines très fermées conduisant à une pression de suralimentation plus élevée à bas régime au prix d'une augmentation de la contre-pression à l'échappement aux forts régimes ;
- la deuxième consiste à utiliser une turbine à géométrie variable, permettant également une pression de suralimentation plus élevée à bas régime, sans accroître autant la contre-pression à haut régime.

L'invention a pour but, surtout, d'améliorer le fonctionnement du moteur, en particulier dans la zone des bas régimes, quelle que soit la taille du moteur, qu'il soit équipé (ou non) d'un dispositif à "waste-gate" et/ou d'une turbine à géométrie variable.

L'invention consiste à exploiter les fluctuations de la pression d'échappement ou bouffées d'échappement, dans la tubulure d'échappement, et à utiliser les phases de faible pression instantanée d'échappement pour assurer un balayage tubulure d'admission/cylindre/tubulure d'échappement et à utiliser les phases de forte pression d'échappement instantanée pour effectuer un post-remplissage du cylindre avec l'air préalablement stocké dans la tubulure d'échappement, à une plage de régime déterminée, le turbocompresseur étant choisi pour éviter un "contre-balayage" et un "post-remplissage" néfaste, avec des gaz d'échappement, aux régimes supérieurs à la susdite plage de régime prédéterminée.

De préférence, la plage de régime prédéterminée est celle des bas régimes alors que le turbocompresseur fournit une pression insuffisante pour une suralimentation efficace.

Ainsi, selon l'invention, le procédé pour améliorer le fonctionnement d'un moteur thermique suralimenté, principalement par turbocompresseur, et balayé avec de l'air est caractérisé par le fait que, sur un même collecteur de gaz d'échappement, on regroupe un nombre de cylindres tel que la pression dans la tubulure d'échappement présente, en fonction du temps, des fluctuations d'amplitudes sensibles, et que l'on assure une ouverture de la soupape d'échappement d'un cylindre qui est en cours d'aspiration ou de remplissage de manière telle que pour une plage de régime déterminée, une phase de faible pression d'échappement instantanée présente dans la tubulure d'échappement, permette d'assurer un balayage tubulure d'admission/cylindre/tubulure d'échappement durant l'ouverture simultanée de la soupape ou lumière d'admission et de la soupape d'échappement, et que la phase de forte pression d'échappement instantanée, due à un autre cylindre, après fermeture de la soupape ou lumière d'admission et autant que la soupape d'échappement est encore ouverte, est utilisée pour effectuer un post-remplissage du cylindre avec l'air préalablement stocké dans la tubulure d'échappement, et que la taille de la turbine est choisie pour qu'à des régimes supérieurs à la susdite plage déterminée il n'y ait pratiquement pas de post-remplissage du cylindre avec des gaz d'échappement.

L'auto-suralimentation ainsi réalisée, par effet de post-remplissage, en utilisant judicieusement les phases de faible et forte pression instantanée dans la tubulure d'échappement, améliore sensiblement le rendement et le fonctionnement du moteur.

L'invention est également relative à un moteur thermique suralimenté, agencé pour la mise en oeuvre du procédé défini précédemment, ce moteur thermique étant caractérisé par le fait qu'il comporte un nombre de cylindres, branchés sur un même collecteur de gaz d'échappement, tel que la pression dans la tubulure d'échappement présente, en fonction du temps, des fluctuations d'amplitudes sensibles et qu'il comporte des moyens d'ouverture de la soupape d'échappement d'un cylindre qui est en cours d'aspiration ou de remplissage de manière telle que, dans une plage de régime déterminée, une phase de faible pression d'échappement instantanée présente dans la tubulure d'échappement, permette d'assurer un balayage tubulure d' admission/cylindre/tubulure d'échappement durant l'ouverture simultanée de la soupape ou lumière d'admission et de la soupape d'échappement, et que la phase de forte pression d'échappement instantanée, due à un autre cylindre, après fermeture de la soupape ou lumière d'admission et autant que la soupape d'échappement est encore ouverte, est utilisée pour effectuer un post-remplissage du cylindre avec l'air préalablement stocké dans la tubulure d'échappement et que la taille de la turbine est choisie pour qu'à des régimes supérieurs à la susdite plage déterminée il n'y ait pratiquement pas de post-remplissage du cylindre avec des gaz d'échappement.

La fermeture de la soupape d'échappement (fin de la levée d'ouverture) a lieu au plus tôt à l'instant de la pointe de pression dans la tubulure d'échappement et, au plus tard, 30° de vilebrequin après cette pointe de pression.

La fermeture de la soupape ou lumière d'admission (fin de la levée d'ouverture) a lieu entre 30° et 10° de vilebrequin avant la fin de la levée d'ouverture de la soupape d'échappement.

Les cylindres regroupés sur un même collecteur ont des écarts d'allumage tels que lorsqu'un premier cylindre est en fin de remplissage (fin de phase d'aspiration pour un "quatre temps" ; fin de phase de balayage pour un "deux temps"), un autre cylindre est en début d'échappement ; la "bouffée" créée par cet autre cylindre dans le collecteur d'échappement assure le post-remplissage du premier cylindre.

L'invention peut s'appliquer à un moteur deux temps à soupapes d'échappement et à soupapes ou lumières d'admission. Par la suite, l'expression"soupape d'admission" englobera indifféremment soupape ou lumière d'admission pour les deux temps. Dans ce cas, on maintient l'ouverture de la soupape d'échappement au-delà de la fermeture de la soupape d'admission pour pouvoir bénéficier de la "bouffée" d'un autre cylindre, regroupé sur le même collecteur d'échappement, après la phase de balayage.

En pratique, les groupements de cylindres possibles, sur un même collecteur d'échappement, pour un moteur deux temps et pour des cylindres présentant entre- eux un écart, ou déphasage angulaire de leur cycle respectif exprimé en degrés de vilbrequin, égal ou le plus constant possible, sont :
- deux cylindres avec un écart de 180° ;
- trois cylindres avec un écart de 120°.
- quatre cylindres avec un écart de 90°.

Bien entendu, l'invention s'applique également aux moteurs quatre temps. Dans ce cas, la soupape d'échappement est généralement fermée après le début de la phase d'aspiration et, selon l'invention, est réouverte dans la fin de la phase d'aspiration, et jusqu'au-delà du point mort bas.

Dans le cas du moteur quatre temps, dans lequel la soupape d'échappement est fermée après le début de la phase d'aspiration, avantageusement, la soupape d'échappement est réouverte dans la fin de la phase d'aspiration.

Par conséquent, pour un moteur quatre temps, les groupements de cylindres préférés sur un même collecteur d'échappement aboutissant à une seule entrée turbine, ces cylindres présentant entre eux un écart d'allumage, ou déphasage angulaire de leur cycle respectif exprimé en degrés de vilebrequin, égal ou le plus identique possible, sont :
- deux cylindres avec un écart de 360° ;
- quatre cylindres avec un écart de 180° ;
- cinq cylindres avec un écart de 144° ;
- six cylindres avec un écart de 120° ;
- sept cylindres avec un écart d'environ 103°.

En pratique, un groupement avec huit, neuf et dix cylindres sur un même collecteur aboutissant à une seule entrée turbine reste possible, mais conduit à un effet de post-remplissage d'autant plus faible que le nombre de cylindres regroupés sur un même collecteur est élevé.

L'effet de post-remplissage obtenu est d'autant plus important que l'amplitude de la "bouffée" est grande. Cette amplitude est d'autant plus grande que la section de turbine vue par une "bouffée" est faible et que le volume du collecteur est réduit. Ces deux conditions sont d'autant mieux remplies qu'il y a moins de cylindres regroupés sur une même entrée turbine.

L'invention consiste, mises à part les dispositions exposées ci-dessus, en un certain nombre d'autres dispositions dont il sera plus explicitement question ci-après à propos d'exemples de réalisation décrits avec références aux dessins ci-annexés, mais qui ne sont nullement limitatifs.

La figure 1, de ces dessins, est un schéma d'un moteur thermique fonctionnant selon le procédé de l'invention.

La figure 2 est un diagramme représentant les variations de la pression moyenne effective, exprimée en bars, en fonction de la vitesse de rotation pour un moteur Diesel quatre temps suralimenté par turbocompresseur, de type moteur d'automobile, classique, et pour un moteur selon l'invention.

La figure 3 est un diagramme illustrant, pour un moteur Diesel quatre temps suralimenté par turbocompresseur, de type moteur automobile, avec cylindres branchés par quatre sur un même collecteur d'échappement, et avec une seule entrée sur la turbine :
- les variations de la pression moyenne d'alimentation de la turbine, représentées en trait plein et les courbes enveloppes limites supérieure et inférieure des fluctuations de la pression d'alimentation de la turbine, ces courbes enveloppes étant représentées en traits mixtes ;
- les variations de la pression moyenne de l'air de suralimentation régnant à l'admission de chacun des cylindres, représentées en tirets,

la pression, exprimée en bars, étant portée en ordonnée, tandis que la vitesse de rotation, exprimée en tours par minute, est portée en abscisse.

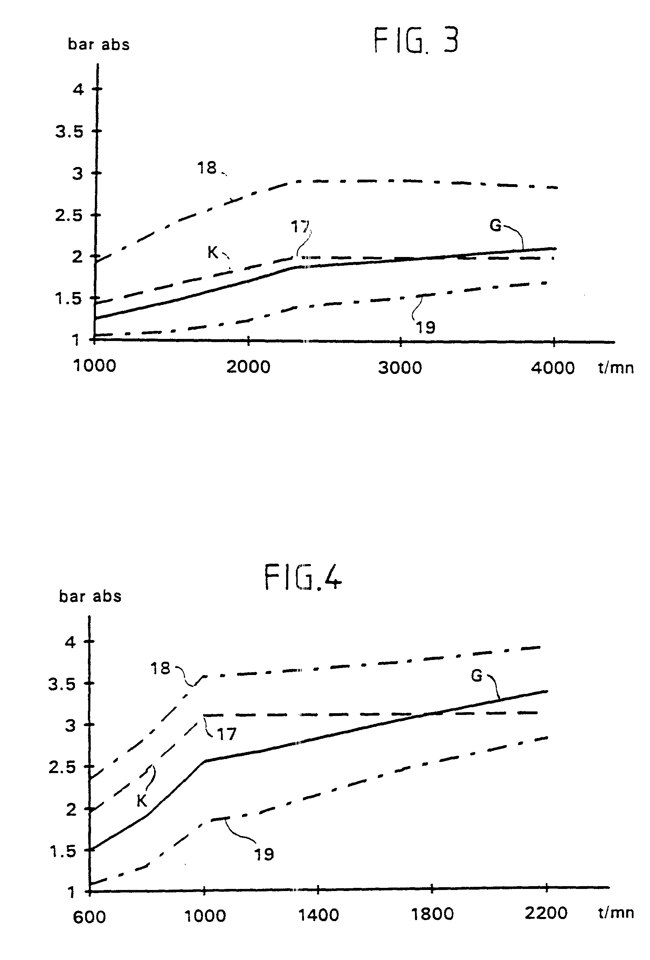

La figure 4 est un diagramme semblable à celui de la figure 3 dans le cas d'un moteur quatre temps suralimenté, de type moteur de camion ou analogue, dont les cylindres sont groupés par six sur un même collecteur d'échappement, et avec une seule entrée sur la turbine.

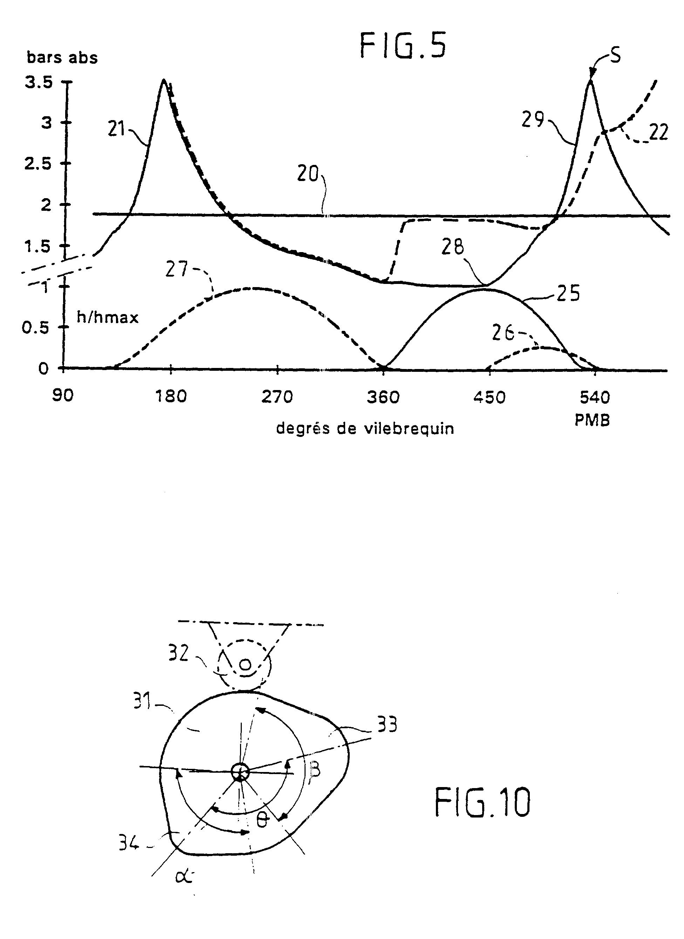

La figure 5 est un diagramme représentant, pour un moteur quatre temps selon l'invention, de type moteur d'automobile, dont les cylindres sont groupés par deux sur un même collecteur d'échappement:
- en partie basset, en trait plein, la levée de la ou des soupapes d'admission et en tirets la levée de la ou des soupapes d'échappement, les angles de vilebrequin étant portés en abscisse et la levée des soupapes d'admission et d'échappement, représentée en valeur relative, rapportée à la valeur de levée maximale de la soupape présentant la levée la plus importante, étant portée en ordonnée ;
- en partie haute : les variations de pression instantanée dans le collecteur d'échappement, représentées en trait plein ; la pression de suralimentation instantanée régnant à l'admission de chacun des cylindres, considérée, par simplification, constante en fonction du temps compte tenu de son faible degré de fluctuation, et représentée par une droite parallèle à l'axe des abscisses ; et la pression instantanée régnant dans le cylindre durant la phase d'ouverture des soupapes représentée en tirets,

les pressions exprimées en bars étant portées en ordonnée, l'abscisse étant celle déjà citée et représentée en partie basse, pour un fonctionnement du moteur à pleine charge et à bas régime de 1500 tours/minute.

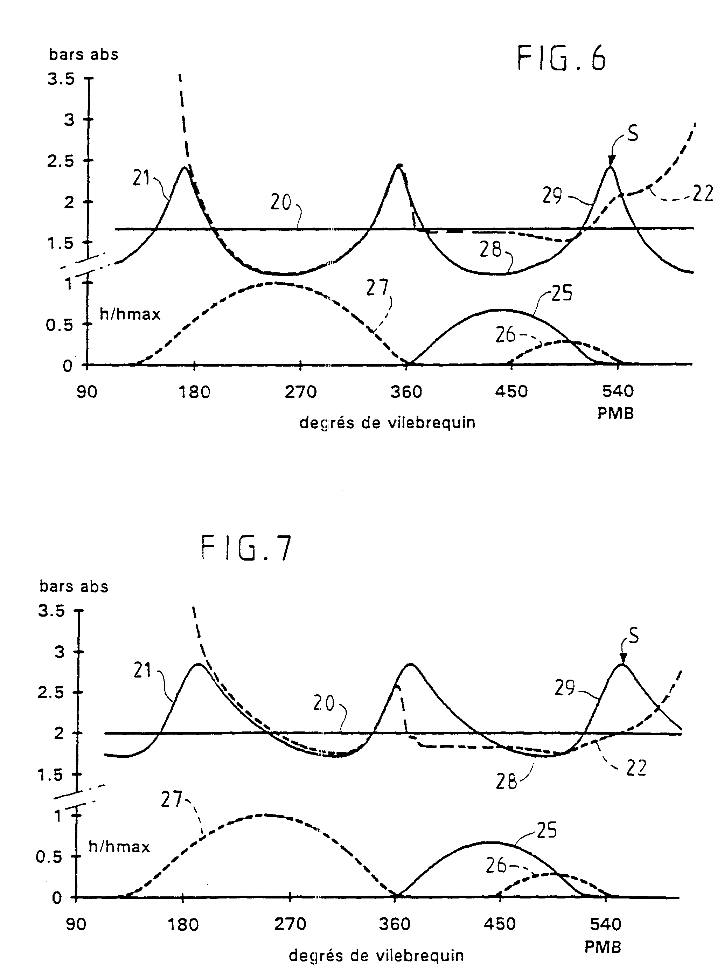

La figure 6 est un diagramme semblable à celui de la figure 5 pour un moteur quatre temps selon l'invention, de type moteur automobile, dont les cylindres sont branchés par quatre sur un même collecteur d'échappement, à pleine charge, à 1500 tours/minute.

La figure 7 est un diagramme semblable à celui de la figure 6 pour le même moteur thermique fonctionnant à pleine charge à 4000 tours/minute.

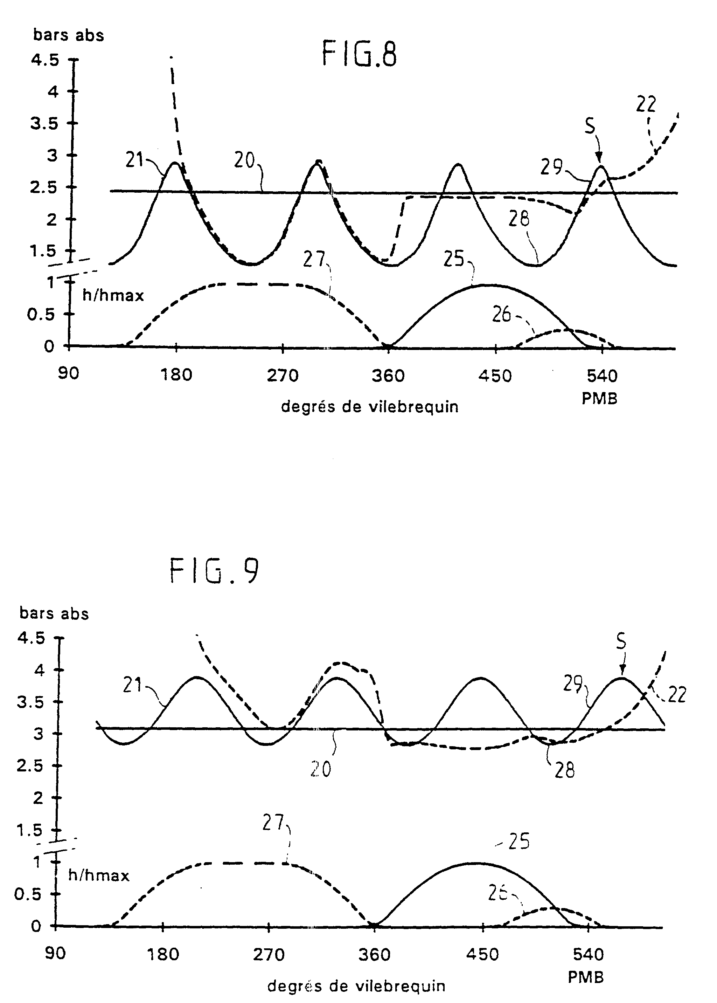

La figure 8 est un diagramme semblable à celui de la figure 5 pour un moteur quatre temps suralimenté, de type moteur de camion ou analogue, selon l'invention dont les cylindres sont branchés par six sur un même collecteur d'échappement, à pleine charge, à 800 tours/minute.

La figure 9 est un diagramme semblable à celui de la figure 8 pour le même moteur thermique fonctionnant à pleine charge, à 2200 tours/minute.

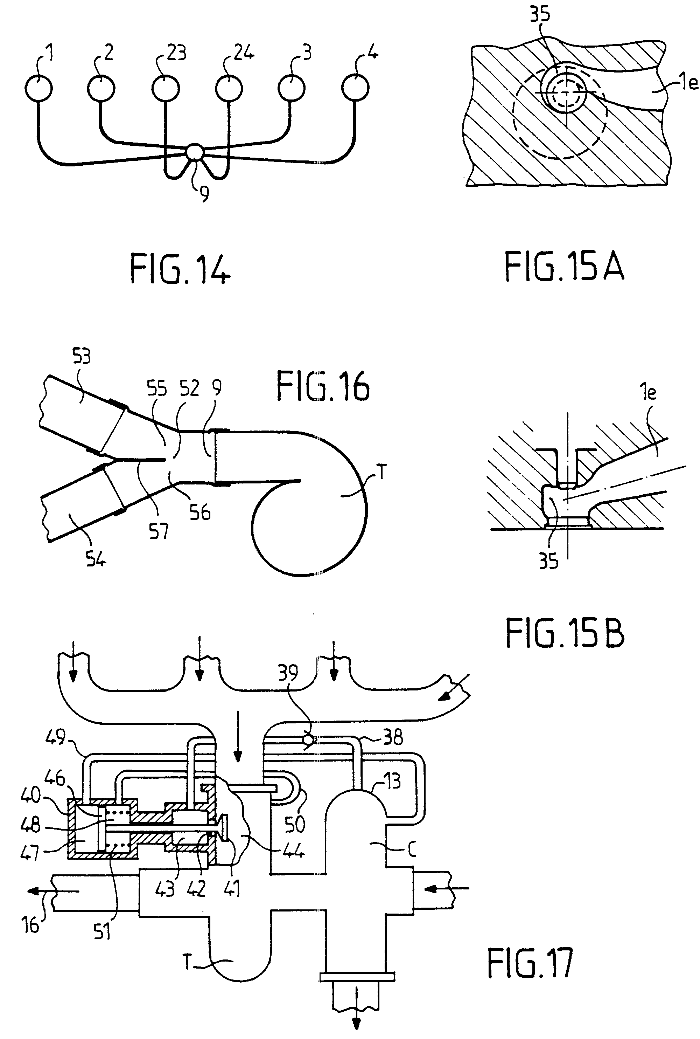

La figure 10 illustre schématiquement une came pour la commande de la soupape d'échappement selon l'invention, en accord avec les schémas des figures 8 et 9.

Les figures 11 et 12 sont des schémas de branchements possibles des cylindres d'un moteur à quatre cylindres sur un ou deux collecteurs d'échappement, avec une ou deux entrées de turbine.

Les figures 13 et 14 sont des schémas semblables à ceux des figures 11 et 12 pour des branchements possibles de l'échappement des cylindres d'un moteur à six cylindres, avec trois ou une entrées de turbine.

Les figures 15A et 15B sont des vues schématiques, en plan et en coupe verticale, de la tubulure d'échappement, au voisinage de la soupape.

La figure 16 est un schéma d'un étranglement sur collecteur.

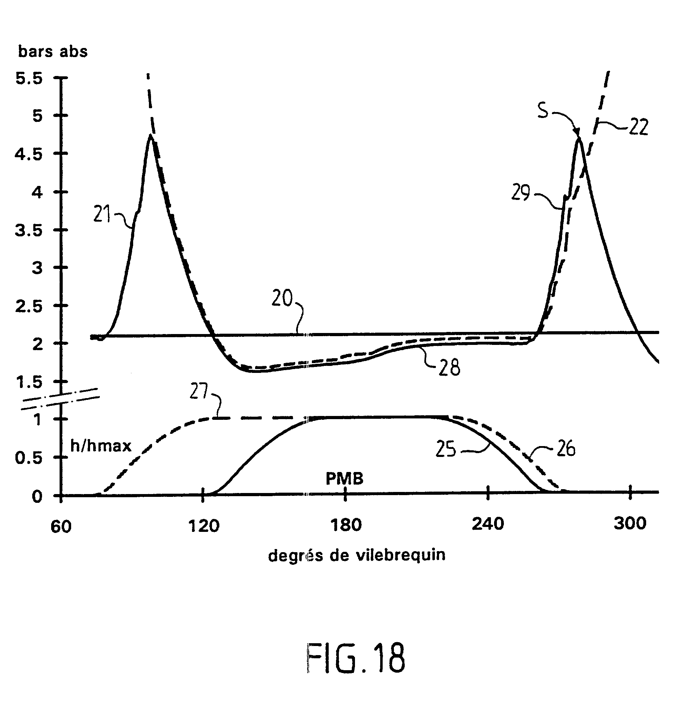

La figure 17 illustre une soupape de dérivation, et ses moyens de commande, d'air de suralimentation, intégrée au carter de turbine, du refoulement compresseur vers l'entrée de la turbine.

La figure 18 est un diagramme semblable à celui de la figure 5, pour le même type de moteur, mais à deux temps, dont les cylindres sont branchés par deux sur un même collecteur d'échappement et sur une même entrée turbine, à pleine charge, à 1 500 tours /minute.

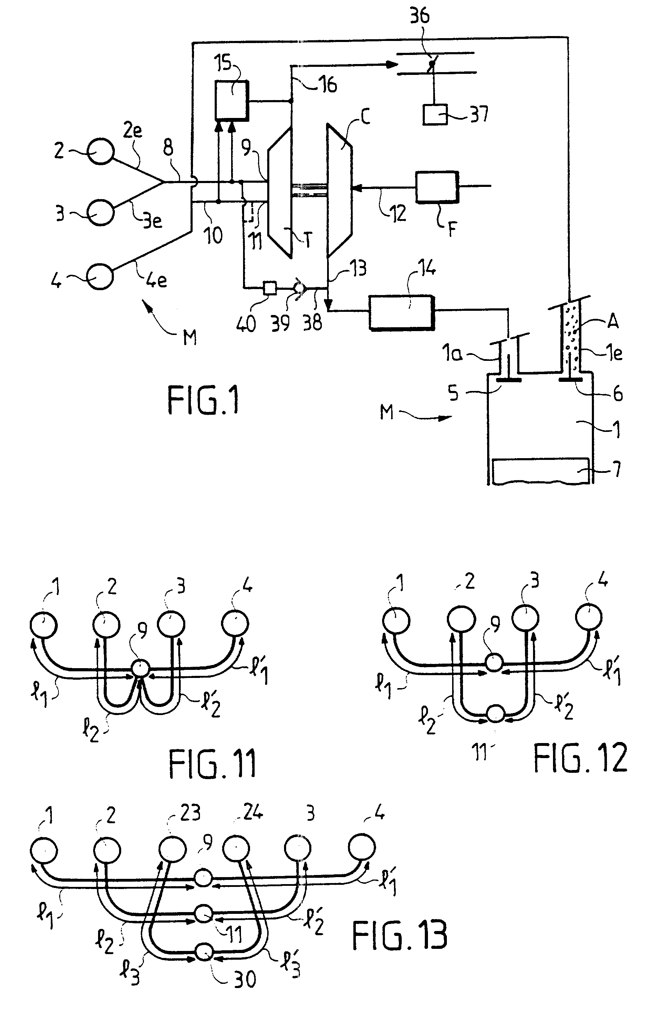

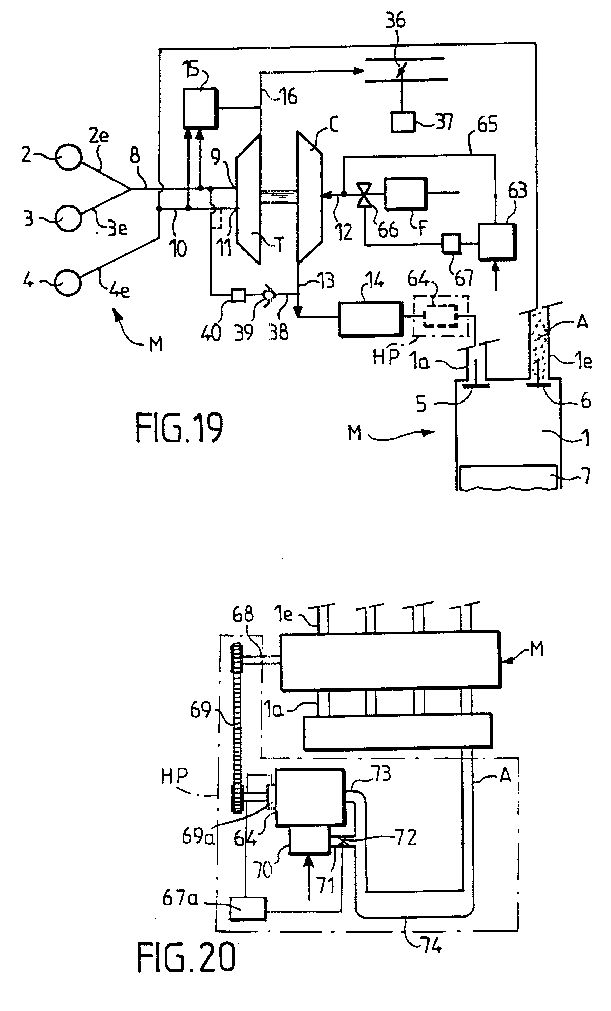

La figure 19 est un schéma d'une variante de réalisation du moteur de la figure 1 avec compresseur mécanique et soufflante.

La figure 20 représente plus en détail le montage du compresseur mécanique de la figure 19.

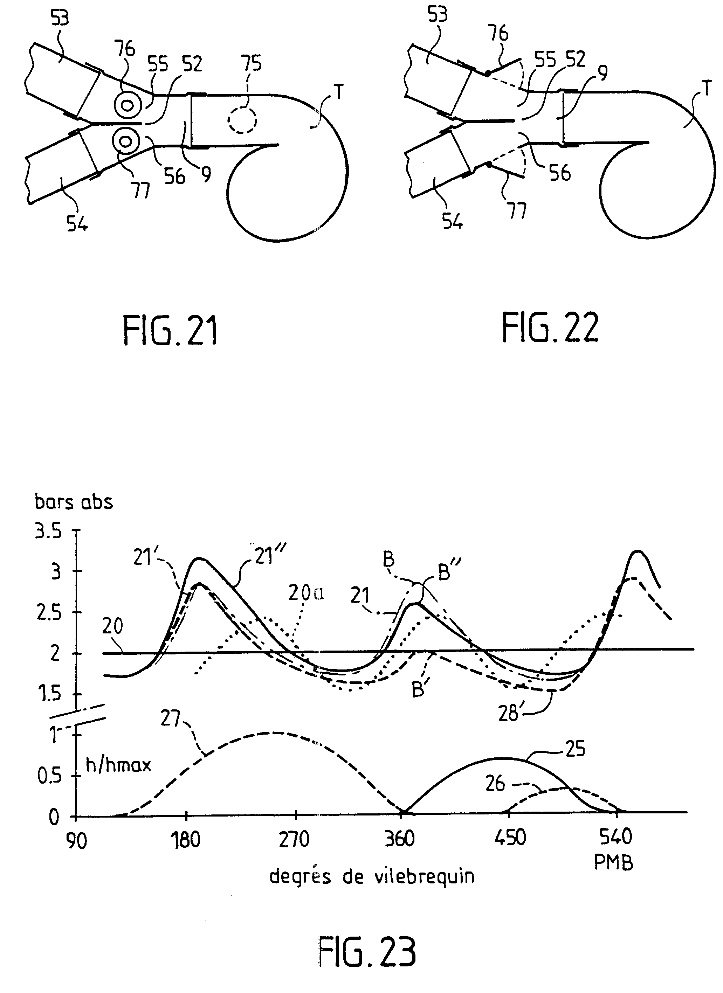

La figure 21 montre une variante de réalisation de l'étranglement sur collecteur de la figure 16, avec deux soupapes "waste-gate".

La figure 22 est un schéma d'une variante de réalisation des soupapes de la figure 21.

La figure 23, enfin, est un diagramme semblable à celui de la figure 7, pour un moteur thermique à haut régime équipé d'un étranglement sur collecteur conforme à la figure 21 ou 22, les deux soupapes "waste-gate" étant ouvertes.

En se reportant à la figure 1 des dessins, on peut voir, schématiquement représenté, un moteur thermique Diesel quatre temps M suralimenté par un ensemble turbocompresseur comprenant une turbine T et un compresseur C entraîné mécaniquement par l'arbre de sortie de la turbine T. Le moteur M est balayé avec de l'air.

Dans l'exemple de la figure 1, le moteur M comporte quatre cylindres 1, 2, 3, 4 sommairement représentés. Le cylindre 1 a été représenté un peu plus en détail avec schématisation d'une soupape d'admission 5 et d'une soupape d'échappement 6. Le piston 7 est partiellement représenté. Les cylindres 2, 3 et 4, semblables au cylindre 1, ont été symboliquement représentés par des cercles ; seules les tubulures d'échappement 2e, 3e, 4e ont été représentées par de simples traits. Pour le cylindre 1, on a représenté l'amorce du conduit d'admission la et du conduit d'échappement 1e, prolongée par un trait.

Les conduits 2e, 3e sont reliés à un même collecteur d'échappement 8 branché sur une première entrée 9 de la turbine. Les conduits 1e, 4e sont reliés à un autre collecteur d'échappement 10 branché sur une autre entrée 11 de la turbine T.

L'entrée 12 du compresseur prélève l'air à la pression atmosphérique à travers un filtre F. La tubulure de sortie 13 du compresseur C fournit l'air comprimé qui traverse un réfrigérant 14 avant d'être distribué aux conduits d'admission tels que 1a des cylindres. Dans le cas où le moteur M est un moteur deux temps à soupapes, le schéma de la figure 1 peut être complété par une soufflante auxiliaire, non représentée à la figure 1, destinée à assurer le balayage au démarrage et aux très faibles charges ; cette soufflante auxiliaire peut être disposée en amont du compresseur C ou en aval du réfrigérant 14.

Dans le cas où le moteur représenté à la figure 1 est du type moteur d'automobile, et comme cela est classique pour la suralimentation de ce type de moteur par turbocompresseur, on prévoit, généralement, une soupape de dérivation 15, appelée "waste-gate" asservie à la pression de suralimentation, fournie par le compresseur C, pour qu'une partie des gaz d'échappement court-circuitent la turbine T afin d'empêcher la pression de suralimentation de franchir un seuil prédéterminé. La soupape 15 est branchée entre les entrées 9, 11 de la turbine et la sortie 16. Généralement, la "waste-gate" se rencontre beaucoup plus souvent sur un groupement de cylindres comportant un seul collecteur d'échappement, comme illustré à la figure 11 ou à la figure 14, avec une seule entrée turbine, en raison de la difficulté de synchroniser l'ouverture simultanée de deux soupapes et du fait que cette soupape est généralement intégrée au carter de turbine.

Un telle soupape 15 est généralement nécessitée par le fait que, pour obtenir une intervention relativement efficace du turbocompresseur aux bas régimes du moteur, dans les moteurs suralimentés connus à ce jour, le turbocompresseur doit être de petite taille. Dans de telles conditions, à un régime élevé, les pressions de suralimentation et par conséquent la pression maximale du moteur deviendraient trop importantes. La soupape 15 en s'ouvrant permet d'éviter de telles pressions trop fortes, mais il en résulte une perte de rendement du moteur qui s'explique par le fait que la pression régnant dans le collecteur d'échappement devient largement supérieure à la pression de suralimentation puisque des taux de dérivation, exprimés par rapport au débit de gaz total, de l'ordre de 40 % et plus, sont aujourd'hui courants avec des turbines très fermées.

La figure 3 illustre, à plein couple, ou pleine charge, en fonction du régime, exprimé en tours par minute, le fonctionnement du moteur, de type moteur d'automobile Diesel à préchambre présentant une pression maximale admissible de 135 bars, selon l'invention dans le cas d'un branchement par quatre cylindres sur un même collecteur d'échappement alimentant l'entrée 9 de la turbine T selon le schéma de la figure 11. Une soupape de dérivation 15 unique est intégrée dans le carter de turbine et limite la pression de suralimentation à 2 bars. La taille de la turbine est telle que le taux de dérivation est limité à environ 20 % au régime maximal du moteur qui est ici de 4000 tours/minute.

Le diagramme de la figure 3 montre par la courbe G en trait plein les variations de la pression instantanée moyenne des gaz régnant dans le collecteur d'échappement et alimentant la turbine T. Mais il est important de comprendre que la valeur instantanée de cette pression fluctue, pour chaque régime, autour d'un point de la courbe G. On a tracé, à titre indicatif, en traits mixtes, sur la figure 3, des courbes 18, 19 constituant, en quelque sorte, les courbes enveloppes des valeurs maximales et minimales de la pression instantanée régnant dans le collecteur d'échappement.

La courbe K en tirets illustre les variations de la pression instantanée moyenne régnant à l'admission de chacun des cylindres, suffisamment peu fluctuante pour ne considérer que sa valeur moyenne.

Les pressions, portées en ordonnée, sont exprimées en bars (10⁵ Pascals).

On remarque que les fluctuations de la pression instantanée atteignent en valeur relative une amplitude maximale aux bas régimes. L'objet de l'invention est de les exploiter.

A chaque régime, la différence de pression entre un point de la courbe K et un point de la courbe 19 représente en quelque sorte le potentiel de balayage maximal entre l'admission et l'échappement du moteur, tandis que la différence entre un point de la courbe 18 et un point de la courbe K représente en quelque sorte le potentiel de post-remplissage maximal.

L'influence de l'ouverture de la soupape 15 se traduit par le coude 17 visible sur la courbe K et également sur la courbe G.

La figure 4 est un diagramme semblable à celui de la figure 3 qui illustre les mêmes courbes dans le cas d'un moteur, de type moteur de camion ou analogue Diesel à injection directe présentant une pression maximale admissible de 160 bars, dont les cylindres sont groupés par six sur un même collecteur d'échappement, et avec une seule entrée turbine. Une soupape de dérivation 15 unique est intégrée dans le carter turbine et est prévue pour limiter la pression de suralimentation à 3,1 bars, soit à une valeur sensiblement plus élevée que dans le cas de la figure 3. La taille de la turbine est telle que le taux de dérivation atteint 22 % au régime maximal du moteur qui est ici de 2200 tours/minute. De par sa taille plus importante, le rendement de la turbine et du compresseur est supérieur à celui de l'exemple montré à la figure 3, respectivement de 8 et 6 points.

On remarque que bien qu'il s'agisse d'un branchement par six cylindres sur un seul collecteur d'échappement, les fluctuations de pression engendrées dans le collecteur d'échappement sont importantes et qu'en valeur relative l'amplitude maximale est atteinte aux bas régimes.

Il est important de noter l'influence du rendement amélioré du turbocompresseur sur les positions relatives des courbes de pression à plein couple montrées à la figure 4 ; on remarque en particulier que le potentiel de balayage est sensiblement accru, tandis que le potentiel de post-remplissage est réduit par rapport aux conditions représentées à la figure 3 ; ce fait provient de l'amélioration du rendement du turbocompresseur. A partir de ces conditions de plein couple on comprendra qu'en abaissant la charge du moteur, notamment aux bas régimes, les conditions de post-remplissage s'améliorent sensiblement.

On comprendra mieux le fonctionnement du moteur à l'examen détaillé des figures 5 à 9, de présentation identique, représentant en fonction du temps exprimé en degrés de vilebrequin le diagramme de distribution particulier propre à l'invention et les pressions instantanées régnant à l'admission du cylindre, dans le cylindre et le collecteur d'échappement pour différents moteurs et différentes conditions de fonctionnement du moteur.

Le détail des courbes est présenté sur l'exemple montré à la figure 5, correspondant à un branchement par deux cylindres sur un même collecteur et une seule entrée turbine, pour un moteur quatre temps de type moteur d'automobile, à plein couple, à un régime bas de 1500 tours/minute, mais reste semblable pour les figures 6, 7, 8 et 9. Une soupape de dérivation 15 unique est intégrée dans le carter de turbine et est prévue pour limiter la pression de suralimentation à 2 bars, comme dans le cas du moteur de la figure 3. La taille de la turbine est telle que le taux de dérivation atteint 40 % au régime maximal du moteur, identique à celui de la figure 3, soit 4 000 tours/minute.

En abscisse, en partie basse, ont été portés les degrés de vilebrequin qui définissent la position du piston 7 dans le cylindre 1. En partie haute, les fluctuations de la pression instantanée dans le collecteur d'échappement sont illustrées par la courbe en trait plein 21, et les variations de la pression instantanée régnant dans le cylindre sont représentées par la courbe en tirets 22.

La ligne horizontale 20 représente la valeur moyenne de la pression de suralimentation peu fluctuante régnant à l'admission de chacun des cylindres.

En partie basse et en ordonnée, la levée des soupapes d'admission et d'échappement a été représentée par le rapport h/hmax de la levée h à la levée maximale hmax de la soupape d'échappement présentant, dans ce cas, la levée la plus importante. La levée de la ou des soupapes d'admission 5 est illustrée sur la figure 5 par la courbe en trait plein 25, tandis que la levée de la ou des soupapes d'échappement 6 est illustrée par la courbe 27, 26 en tirets. En abscisse, sont portés les degrés de vilebrequin comme déjà indiqué. Le point mort bas PMB pour le cylindre 1 est marqué sur l'axe des abscisses de la figure 5.

A la figure 5 on distingue sur la courbe 21, représentant la pression instantanée dans le collecteur d'échappement, une phase de faible pression instantanée dans la phase d'admission précédant le PMB, dont la position de minimum de pression instantanée, avant que la pression ne remonte, est marquée 28. On distingue ensuite une remontée, progressive puis plus brutale, de la pression instantanée dans le collecteur d'échappement, la partie 29 de la courbe 21 indiquant la zone de forte pression, correspondant à la bouffée du cylindre 4 suivant à 360° le cycle du cylindre 1, pour atteindre un maximum ou pointe de pression S aux alentours du PMB avant de diminuer à nouveau.

Le minimum de pression 28 correspondrait, au régime considéré, au point de la courbe 19 d'une figure semblable à la figure 3, réalisée pour un branchement par quatre cylindres sur un même collecteur d'échappement, qui aurait été présentée pour le type de branchement par deux cylindres propre à la figure 5.

La pointe S correspondrait au point de la courbe 18.

Les diagrammes des figures 6 et 7 se rapportent au même moteur que celui de la figure 3.

Les diagrammes des figures 8 et 9 se rapportent au même moteur que celui de la figure 4.

On voit que dans le cas représenté à la figure 5 à la fois le potentiel de balayage et le potentiel de post-remplissage sont plus importants que dans le cas présenté à la figure 6 sur le même type de moteur et au même régime mais à branchement par quatre cylindres ; le minimum de pression instantanée 28 correspond alors au point de la courbe 19 de la figure 3, tandis que la pointe S correspond au point de la courbe 18 de la figure 3 à 1500 tours/minute.

Un diagramme similaire à celui des figures 3 et 4 n'a pas été représenté pour le cas du moteur correspondant à la figure 5 car celle-ci démontre suffisamment l'importance de l'effet de post-remplissage possible dans le cas d'un branchement par deux cylindres sur un même collecteur d'échappement et une seule entrée turbine et que le potentiel de balayage est très important à tous les régimes ; en effet la pression instantanée dans le collecteur d'échappement diminue jusqu'à atteindre la pression régnant à la sortie de la turbine en raison de l'absence de bouffée pendant la phase d'aspiration du cylindre 1. Le potentiel d'autosuralimentation est extrêmement élevé puisque la pression atteinte dans le cylindre 1 dépasse de 50 % environ le remplissage maximal que peut supporter le moteur.

L'adaptation de l'invention au cas du branchement par deux cylindres sur un même collecteur est ainsi très facile à mettre en oeuvre et peut permettre des réalisations avec des turbines plus ouvertes sans nécessiter de "waste-gate".

L'invention prévoit de regrouper sur une même tubulure d'échappement telle que 8, 10, un nombre de cylindres tel que les fluctuations illustrées par la courbe 21, en particulier à bas régime, aient des amplitudes sensibles. Ce nombre de cylindres par collecteur est de préférence inférieur ou égal à sept à l'exception du trois cylindres pour les moteurs quatre temps et égal à deux, trois ou quatre cylindres pour les moteurs deux temps.

Avantageusement, seulement deux cylindres 2, 3 ou 1, 4 sont branchés sur un même collecteur d'échappement 8 ou 10, ces cylindres étant calés à 360° de vilebrequin. Le branchement des tubulures d'échappement illustré sur la figure 1 est résumé schématiquement par la figure 12. Il est à noter que ce branchement, comme schématisé sur la figure 12, est effectué avec une longueur 11, l'1 ou l2, l'2 de tubulure raccordant les orifices d'échappement de deux cylindres 1, 4 ou 2, 3, branchés sur un même collecteur d'échappement. Il est souhaitable que lesdites tubulures présentent des longueurs l1, l'1 ou l2, l'2 aussi voisines entre elles que possible et que ces tubulures aboutissent aussi près que possible de l'entrée du carter de turbine avant de se regrouper. En effet, le volume d'air stockable et utilisable dans la phase subséquente de post-remplissage peut au plus représenter le volume d'une tubulure. Le volume ainsi utilisable représenté par une tubulure doit être suffisant pour permettre l'effet d'autosuralimentation recherché mais le volume du collecteur doit par ailleurs être aussi faible que possible pour que l'amplitude des fluctuations de pression engendrées dans le collecteur d'échappement soient aussi fortes que possible.

En pratique, les fluctuations de pression sont principalement fonction de la section de passage équivalente de la turbine, c'est-à-dire de la "taille de turbine" et de la vitesse d'ouverture de la levée 27 de la soupape d'échappement 6.

La figure 11 est un schéma d'une autre configuration de branchement des. orifices d'échappement de quatre cylindres sur une seule entrée 9 d'une turbine T, permettant d'obtenir des fluctuations d'amplitude suffisantes telles que celles illustrées par la courbe 21 de la figure 6 entre un minimum 28 et un maximum ou pointe de pression S pour la pression instantanée régnant dans le collecteur d'échappement.

En comparant la figure 6, correspondant au cas d'un branchement de quatre cylindres sur un même collecteur, à la figure 5, correspondant au cas d'un branchement de seulement deux cylindres sur un même collecteur, on voit que l'amplitude relative des "bouffées" par rapport à la pression de sortie du compresseur diminue quand le nombre de cylindres augmente.

Le schéma de la figure 13 concerne un moteur à six cylindres (1, 4), (2, 3) et (23, 24) dont les orifices d'échappement sont reliés deux à deux à trois entrées 9, 11, 30 de la turbine T, par l'intermédiaire des tubulures de longueur (l1, l'1), (l2, l'2), (l3, l'3).

La figure 14 est un schéma d'une autre configuration de branchement des orifices d'échappement de six cylindres (1, 4), (2, 3), (23, 24) sur une seule entrée 9 d'une turbine T, permettant d'obtenir des fluctuations d'amplitudes suffisantes telles que celles illustrées par la courbe 21 de la figure 8 entre un minimum 28 et un maximum ou pointe de pression S pour la pression instantanée régnant dans le collecteur d'échappement.

Comme visible sur la figure 5 ou sur la figure 6, la pointe de pression S à l'entrée 9 de la turbine T se produit sensiblement en fin de remplissage d'un premier cylindre 1, c'est-à-dire à la fin de la levée ou de l'ouverture de la soupape d'admission 5. La montée S de pression, vue par le cylindre 1, dans la tubulure d'échappement est due à l'autre cylindre 4, branché sur cette même tubulure, qui est en début d'échappement.

Selon le procédé de l'invention, on ouvre la soupape d'échappement 6 du cylindre 1 alors qu'il est en cours d'aspiration ou de remplissage, comme cela est illustré par la courbe 26 en tirets de la figure 5. Dans le cas d'un moteur à quatre temps, considéré dans ces exemples de réalisation, la courbe 26 correspond à une réouverture de la soupape d'échappement 6 qui, après son ouverture classique représentée par la courbe en tirets 27, s'est refermée au début de la phase d'aspiration.

Comme visible (d'après la figure 5, mais aussi d'après la figure 6 ou encore la figure 8), le début de la réouverture de la soupape d'échappement 6 se produit alors que, dans la tubulure d'échappement, la pression instantanée, correspondant au minimum 28 de la pression instantanée 21 régnant dans le collecteur d'échappement, est inférieure à la valeur moyenne 20 de la pression de suralimentation régnant à l'admission du cylindre 1. L'air admis par la soupape 5 encore ouverte, va pouvoir balayer le cylindre et la tubulure d'échappement pendant l'ouverture simultanée de la soupape d'admission 5 et de la soupape d'échappement 6. Un volume d'air A, schématiquement représenté par des bulles sur la figure 1, se trouve stocké dans la tubulure d'échappement 1e, au voisinage de la soupape d'échappement 6, pouvant occuper au maximum le volume de la tubulure de longueur 11.

A bas régime, la phase 29 (figure 5) de forte pression d'échappement instantanée (supérieure à la pression moyenne de suralimentation) va se produire après la fermeture de la soupape d'admission 5 et alors que la soupape d'échappement 6 est encore ouverte.

L'air A, préalablement stocké dans la tubulure d'échappement 1e, est refoulé, par la crête de pression 29 (figure 5) dans le cylindre 1, ce qui assure un post-remplissage de ce cylindre ; comme visible sur les figures 5, 6 et 8, l'effet de post-remplissage est très perceptible sur la pression instantanée 22 régnant dans le cylindre dans la phase de forte pression instantanée 29 à l'échappement ; elle coïncide avec la phase de fermeture de la soupape d'admission 5 selon la levée 25 en trait plein, alors que la soupape d'échappement 6 est encore ouverte selon levée 26 en tirets, aux alentours du PMB. On constate que l'effet de post-remplissage est d'autant plus fort que le nombre de cylindres regroupés sur une même entrée turbine est réduit ; la raison principale tient à la section de passage équivalente de la turbine, constituant la section de sortie du collecteur d'échappement pour le débit de gaz d'échappement. Les cylindres des moteurs pris comme exemples aux figures 5 et 6 sont identiques mais la section de turbine vue par une bouffée est, dans le branchement par quatre cylindres de la figure 6, double de celle du branchement par deux cylindres de la figure 5 ; si un cylindre identique avait été choisi pour le branchement par six cylindres de la figure 8, la section de turbine aurait été 1,5 fois plus grande que celle du branchement par quatre cylindres ; cela explique les différences d'amplitude des fluctuations de pression.

L'effet de post-remplissage décrit ne suffit pas à expliquer, en totalité, l'amélioration de remplissage obtenue aux bas régimes. En effet, le gain de taux de remplissage, représenté en première approximation par l'élévation de la pression 22 au début de la course de compression, et visible sur les figures 5, 6 et 8, par rapport à un moteur suralimenté classique, s'élève à une valeur allant d'environ 50 %, pour le branchement par deux cylindres, à près de 30 % pour le branchement par six cylindres. En effet, l'accroissement du débit d'air aux bas régimes, provoqué par la phase de balayage en fin d'aspiration, peut représenter, à rapport de pression donné du compresseur, des valeurs allant, selon les cas, de 50 % à 100 %. Ce fait réduit considérablement ou supprime totalement la difficulté d'adaptation du "champ moteur" au "champ compresseur" qui représente une difficulté majeure de la suralimentation des moteurs à plage de régime étendue et permet de comprimer l'air avec un rendement sensiblement accru.

Mais surtout le gain de taux de remplissage, aux bas régimes, permet de reculer considérablement la limite de débit carburant en raison de l'accroissement de l'excès d'air de combustion, ce qui entraîne une élévation de la pression délivrée par le turbocompresseur.

Cet avantage est déterminant aux bas régimes ; pour le branchement par deux cylindres, le couple maximal réalisable n'est plus dicté par le manque d'air mais par la pression maximale admissible du moteur ; pour le branchement par quatre cylindres, on rencontre à peu près en même temps la limite d'excès d'air et la limite de pression maximale du moteur.

Un autre avantage déterminant est l'absence de temps de réponse de l'auto-suralimentation par effet de post-remplissage tel que décrit ; en effet, pour toute charge inférieure à la pleine charge, à partir d'un bas régime d'où on procède à une augmentation instantanée de charge et une accélération du moteur, il y a toujours une quantité d'air suffisante présente dans la tubulure d'échappement le prête à être refoulée par la bouffée du cylindre 4.

En effet, qu'il s'agisse d'une charge moyenne, avec un excès d'air moyen, où l'équilibre énergétique de la boucle de suralimentation assure des conditions de balayage satisfaisantes, ou d'une charge très faible sans balayage possible mais avec un excès d'air très important et ainsi des gaz d'échappement constitués principalement d'air, le volume de la tubulure d'échappement le est rempli sur toute la longueur l1 en majeure partie par une réserve de gaz dont la composition est de l'air pur et froid ou de l'air presque pur de température relativement basse, de l'ordre de 100° C à 150° C correspondant à la température d'échappement du point de fonctionnement considéré.

L'accroissement instantané de débit carburant dans le cylindre 4 génère en un temps correspondant à la phase de détente, soit en l'espace d'un demi-tour de vilebrequin, ou encore 0,03 seconde à 1 000 tours/minute, une bouffée dans le collecteur d'échappement dont la zone de forte pression 29 est similaire à celle rencontrée à pleine charge.

Cette caractéristique permet d'éliminer l'inconvénient bien connu des moteurs suralimentés par turbocompresseur.

On comprendra ainsi que le débit carburant, en phase transitoire, peut être asservi non plus à la pression d'air de suralimentation, comme cela se pratique sur les moteurs à suralimentation classique, mais au contraire, à la différence de pression instantanée moyenne K régnant à l'admission de chacun des cylindres et la pression instantanée moyenne G régnant dans le collecteur d'échappement ; en effet, cette grandeur représente le potentiel de balayage instantané permettant le stockage de l'air A destiné à être refoulé dans le cylindre 1 par la bouffée du cylindre 4.

La capacité de prise de charge instantanée d'un moteur selon l'invention est ainsi identique à celle d'un moteur non suralimenté, dit à aspiration naturelle, dès lors que durant la prise de charge les conditions de balayage sont assurées.

En pratique, ce seuil dépend du rendement du turbocompresseur et du nombre de cylindres branchés sur une même entrée turbine. Dans un branchement par deux cylindres, ce seuil se situe pratiquement à charge nulle.

On réalise ainsi une auto-suralimentation par effet de post-remplissage qui vient, en quelque sorte, compléter l'action du turbocompresseur, qui serait convenablement dimensionné pour les hauts régimes avec ou sans "waste-gate" selon le type de moteur et la plage de fonctionnement, mais qui ne fournirait pas une pression de suralimentation suffisante à bas régime.

Il apparaît donc que l'invention permet d'améliorer sensiblement le fonctionnement d'un moteur suralimenté par turbocompresseur.

La comparaison des figures 6 et 7 d'une part et des figures 8 et 9 d'autre part illustre clairement, en complément des variations des valeurs moyennes des courbes K et G présentées aux figures 3 et 4 correspondant respectivement au même moteur, par la position relative des pressions instantanées 20, 21 et 22, l'évolution des conditions de balayage et de post-remplissage durant la levée 26 de la soupape d'échappement 6 entre un bas régime et le régime maximal de fonctionnement pour chacun des deux moteurs présentés en exemple.

Pour les bas régimes, on souhaite naturellement une taille de turbine aussi petite que possible de façon à bénéficier non seulement d'une pression de suralimentation K mais aussi d'une pression instantanée dans le collecteur d'échappement (19, G, 18) aussi élevées que possible car le remplissage du cylindre 1 est fonction du maximum de pression instantanée 18, dans la mesure où, préalablement, un balayage suffisant a été assuré.

Pour les régimes élevés et à pleine charge, cependant, il ne doit exister ni de contre-balayage ni de post-remplissage significatifs avec des gaz brûlés durant la phase d'ouverture 26 de la soupape d'échappement 6, de façon à éviter une dégradation, non recherchée, du rendement et de la charge thermique du moteur.

Comme visible d'après les figures 3, 4 et 7, 9 , ces conditions sont naturellement remplies si on choisit la taille de turbine T de telle façon, qu'au régime maximal du moteur la position relative des courbes K et (19, G, 18) ou des courbes de pression instantanée 20 et (28, 21, 29, S) soit sensiblement conforme aux exemples présentés, c'est-à-dire de telle façon que la pression moyenne G dans le collecteur d'échappement ou à l'entrée de la turbine n'excède pas environ de 5 % à 10 % la pression de suralimentation K au régime maximal du moteur à pleine charge.

On note en effet que, pour les deux types de branchement de cylindres, respectivement par quatre à la figure 7 et par six à la figure 9, la position relative des pressions instantanées d'une part et la diminution en valeur relative des fluctuations de pression 21, en rapport avec le diagramme d'ouverture 26 de la soupape 6 choisi, conduisent à l'absence de contre-balayage et de post-remplissage avec des gaz brûlés.

On notera que la pointe S se déplace naturellement vers les angles de vilebrequin plus élevés lorsque le régime augmente, comme cela est clairement visible sur les figures 6 et 7 ou sur les figures 8 et 9, ce qui facilite l'absence de post-remplissage aux régimes élevés. Ce phénomène serait encore renforcé si on choisissait des tubulure l1, l'1 plus longues, compte tenu du décalage angulaire de la bouffée résultant du temps de parcours de l'onde entre le cylindre 4 et le cylindre 1.

En réalité, l'échange des gaz dans la période considérée se déroule de façon globale comme si, aux régimes élevés, l'ouverture 26 de la soupape d'échappement n'existait plus.

Il s'agit là d'un effet de "géométrie variable" naturel réalisé avec une "géométrie fixe".

Bien entendu si, au contraire, on souhaite recycler des gaz brûlés à forte puissance, le réglage de la taille de la turbine T et du diagramme 26 interviendraient différemment de façon à favoriser le recyclage ; le réglage des paramètres mentionnés serait facilité et, en particulier, une turbine plus fermée pourrait être choisie avec pour conséquence un remplissage encore accru aux bas régimes.

Dans le cas où deux cylindres sont regroupés sur un même collecteur et une entrée turbine, il n'y a pas de limite inférieure, imposée par l'invention, à la taille de la turbine ; l'adaptation de l'invention est dans ce cas considérablement simplifiée par l'absence de bouffée entre celles des cylindres 1 et 4. C'est la raison pour laquelle aucun diagramme n'a été présenté pour le régime maximal correspondant au moteur de la figure 5.

On remarque qu'une des difficultés propres aux branchements avec nombre de cylindres élevé (six et plus) sur un même collecteur provient de la diminution du temps disponible entre deux bouffées pour réaliser le balayage durant la phase d'ouverture 26, ce qui conduit à écourter la durée angulaire de cette phase et, par conséquent, la levée maximale réalisable durant cette phase d'ouverture. L'importance du balayage et du post-remplissage possibles est alors réduite.

On peut ainsi réaliser une durée 26 et une levée de la phase d'ouverture d'autant plus grandes que le nombre de cylindres regroupés sur le même collecteur est réduit. A titre d'exemple, la levée 26 de la figure 5, pour le branchement par deux cylindres, s'élève à 28 % de la levée principale 27, mais aurait pu être beaucoup plus importante, si la durée d'ouverture de la phase 26 avait été allongée ; pour le branchement par quatre cylindres du moteur d'après les figures 6 et 7, la levée relative 26 représente également 28 % de la levée principale 27, ce qui constitue environ la valeur maximale possible. Un branchement par six cylindres, pour un moteur automobile présentant le même niveau d'accélération des profils de levée de soupapes que pour le moteur de la figure 5 ou des figures 6 et 7, aurait une levée 26 maximale possible d'environ 20 % de la levée principale 27 et une durée d'ouverture diminuée de 12 degrés de vilebrequin.

La levée 26 du moteur à branchement par six cylindres selon les figures 8 ou 9 représente 31 % de la levée principale 27, en raison du niveau d'accélération supérieur des profils de levée de soupapes qu'il est possible de réaliser sur des moteurs présentant un régime maximal plus faible, en particulier lorsque la came, comme visible à la figure 10, est associée à un suiveur 32 de came de profil circulaire ou non plat.

La commande de la levée de la soupape d'échappement 6 suivant la courbe 26 des figures 8 et 9 peut être assurée, par exemple, tel que représenté schématiquement à la figure 10, par une came 31 agissant sur un suiveur de came 32 , dans le cas présenté, de profil circulaire, mais qui peut être de profil plat, commandant la soupape 6. Cette came 31 comporte un bossage principal 33 d'étendue angulaire β relativement importante, correspondant à la levée classique 27 de la figure 8.

La came 31 présente un autre bossage 34, ou bosse, dont le sommet est décalé d'un angle θ par rapport au sommet du bossage 33. Cette bosse est destinée à provoquer l'ouverture 26 de la soupape d'échappement 6. Dans l'exemple considéré, l'angle β est de 147° d'arbre à came, soit 294° de vilebrequin pour un moteur quatre temps, l'angle θ est de 130° d'arbre à came, tandis que l'angle α est de 77° d'arbre à came.

L'étendue α est, en pratique, choisie aussi grande que possible, en fonction du profil de pression instantanée 28 dépendant du nombre de cylindres regroupés sur un même collecteur d'échappement, pour rester compatible avec une absence de "contre-balayage" à pleine charge et régime maximal de fonctionnement du moteur, comme cela est visible d'après les figures 7 et 9.

Il est à noter que l'on peut configurer la forme du conduit d'échappement 1e pour profiter de la réintroduction d'air ou de gaz de combustion afin de provoquer un tourbillon dans le cylindre 1, favorable à la combustion, de façon analogue à ce qui est pratiqué sur les conduits d'admission de certains moteurs Diesel.

Les figures 15a et 15b illustrent schématiquement une forme hélicoïdale 35 de la tubulure d'échappement 1e dans la zone de la soupape pour créer un tel tourbillon.

Ce tourbillon, induit par l'effet de post-remplissage, est donc plus marqués aux bas régimes ; ce phénomène est particulièrement avantageux pour les moteurs où il est difficile ou impossible de créer un tourbillon par la tubulure d'admission, comme dans le cas des moteurs deux temps à soupapes.

La description des figures 3 et 4 d'une part, et des figures 6 et 8 d'autre part, a permis de constater les conséquences de l'accroissement du rendement du turbocompresseur sur le potentiel de balayage et de post-remplissage.

Dans le cas des figures 4 et 8, en effet, le niveau élevé de la pression de suralimentation (K, 20) vis-à-vis de la pression régnant dans le collecteur d'échappement (G, 21) aux bas régimes, résultant du rendement élevé du turbocompresseur, conduit à un potentiel de balayage inutilement important et à une position de la pointe de pression S dépassant insuffisamment la pression de suralimentation 20 pour provoquer un effet de post-remplissage significatif.

Ce phénomène est encore renforcé lorsque l'invention est appliquée à des moteurs de type industriel, où le compresseur et la turbine du turbocompresseur, de par leur taille, peuvent présenter des rendements supérieurs d'environ 10 points par rapport à l'exemple du moteur de type moteur de camion des figures 4 et 8.

On peut facilement remédier à ce phénomène en déplaçant, vers des pressions plus élevées, les bouffées dans le collecteur d'échappement.

Pour déplacer vis-à-vis de la pression de suralimentation 20, vers des pressions plus élevées les bouffées dans la tubulure d'échappement, 1e, on peut prévoir sur l'échappement 16 de la turbine, comme illustré à la figure 1, un volet d'étranglement 36 dont la fermeture ou l'ouverture est assurée par des moyens de commande 37, par exemple en fonction de l'écart entre les pressions moyennes K et G, de façon à augmenter la contre-pression de la turbine lorsque les conditions de balayage sont trop favorables et améliorer ainsi le potentiel de post-remplissage.

Une solution, plus efficace encore, consiste à prévoir pour de telles conditions de fonctionnement (potentiel de balayage trop fort et potentiel de post-remplissage trop faible) une dérivation d'une fraction du débit d'air fourni par le compresseur C (en amont du réfrigérant 14), au moyen d'une canalisation de liaison 38 (voir figure 1) entre la tubulure de sortie 13 et les tubulures d'entrée 8, 10 de la turbine T.

Pour accroître la fraction de débit d'air ainsi dérivée de façon telle que la pression G soit égale ou supérieure à la pression K, on peut installer un clapet anti-retour 39 en amont de la canalisation 38, permettant un passage de l'air vers l'entrée de la turbine, et empêchant un refoulement des gaz brûlés en sens contraire.

Des moyens de valve commandée 40 sont prévus sur la tubulure 38, entre le clapet 39 et les tubulures 8, 10.

La figure 17 illustre le détail d'une réalisation possible prévue pour les moyens de valve commandée 40. Ces moyens, avantageusement intégrés au carter de turbine, comportent : une soupape 41, qui en position ouverte, libère une section de passage 42 entre une chambre 43, alimentée par la canalisation 38, et l'intérieur 44 de l'entrée du carter de turbine ; et un vérin pneumatique 45 pour commander l'ouverture ou la fermeture de la soupape 41. Ce vérin 45 présente un piston 46, séparant deux chambres 47 et 48, la chambre 47 étant alimentée par une tubulure 49 reliée à la sortie 13 du compresseur C, tandis que la chambre 48 est alimentée par une tubulure 50 reliée à l'intérieur 44 de l'entrée du carter de turbine. Le piston 46 est ainsi soumis à l'écart de pression Δ P entre la pression de suralimentation et la pression moyenne G du collecteur d'échappement régnant dans la chambre 48. Un ressort 51 est prévu dans la chambre 48 pour maintenir la soupape 41 en position fermée lorsque la pression K est inférieure à la pression G.

En fonction du tarage du ressort 51, et si nécessaire en prévoyant un piston étagé 46, on peut réaliser toute caractéristique recherchée pour l'écart de pression Δ P. En pratique, on cherchera à équilibrer le potentiel de balayage et le potentiel de post-remplissage, et à supprimer le clapet 39, en choisissant une caractéristique telle que, en position ouverte de la soupape 41, la pression G soit voisine mais reste inférieure à la pression K.

Une variante de cette solution est d'utiliser les deux chambres 47 et 48, toutes deux remplies d'air à la pression de suralimentation, comme amortisseur de la soupape 41 et non plus comme vérin ; dans ce cas, on pratique un ajutage, non représenté à la figure 17, reliant les chambres 47 et 48, au travers du piston 46 ou à l'extérieur et on élimine la tubulure 50 ; dans ce cas, la position de la soupape 41 résulte de l'action du ressort 51 et l'équilibre des forces de pression agissant sur sa tête, c'est-à-dire la pression de suralimentation K dans chambre 43 et la pression moyenne G à l'intérieur 44 de l'entrée du carter de turbine. Cette variante permet de neutraliser facilement le fonctionnement de la soupape 41, en la maintenant fermée et en restituant ainsi au moteur tout son potentiel de balayage, au-delà d'un certain seuil, par exemple de pression de suralimentation ; ce seuil peut aussi être fonction de la charge (position instantanée de l'accélérateur) et/ou du régime du moteur.

On comprendra que ces moyens de commande 40 peuvent être utilisés, en combinaison ou non, avec une soupape de dérivation 15, ou "waste-gate", et/ou avec une turbine à géométrie variable.

Des moyens de commande asservis à l'écart de pression Δ P, tels que du type présenté à la figure 17, peuvent également constituer, dans le cadre de l'invention notamment, un pilotage judicieux de l'organe réglant la section de passage d'une turbine à géométrie variable.

La figure 16 illustre schématiquement la réalisation d'un étranglement 52 sur le collecteur d'échappement en amont de l'entrée 9 de la turbine, tel que celui de la figure 11, où plus de deux cylindres sont branchés sur la même entrée turbine. Dans l'exemple considéré, les cylindres 1 et 4 sont regroupés sur la tubulure 53, tandis que les cylindres 2 et 3 sont regroupés sur la tubulure 54. Ces tubulures 53, 54 se raccordent à l'entrée 9 de la turbine par deux zones d'étranglement 55, 56. Une cloison intermédiaire 57 assure une progressivité de la diminution des sections au niveau de l'étranglement 52.

La présence de l'étranglement 52 provoque une montée de la pointe S (figures 5 à 9) sans modifier pratiquement le niveau du minimum des phases de faible pression instantanée 28.

Il en résulte une amélioration sensible de l'effet de post-remplissage et un potentiel de balayage amélioré, en créant des conditions similaires à celles obtenues avec un branchement à deux cylindres sur une même entrée turbine comme dans le cas de la figure 5. Cet effet devient significatif dès que la section de passage de l'étranglement 55, 56 devient plus faible que la section de passage de la turbine (section résultante du stator et du rotor). Dans ce cas, la zone de forte pression 29 n'est plus fonction de la "taille" de la turbine mais de la section de passage de l'étranglement.

La figure 18 illustre, par un diagramme semblable à celui de la figure 5, le fonctionnement d'un moteur deux temps selon l'invention, de type moteur d'automobile, dont les cylindres sont regroupés par deux sur un même collecteur d'échappement, à pleine charge, à 1 500 tours/minute. Le moteur est analogue à celui de la figure 5 (même cylindrée unitaire et pression maximale de cycle identique).

Le moteur est équipé d'une turbine à géométrie variable dont la section de passage, et ainsi le taux de détente de la turbine, est pilotée de telle façon que, en dessous d'un certain seuil de pression de suralimentation, par exemple de 2 bars pour une pression de suralimentation maximale de 3 à la puissance maximale, la pression moyenne G soit toujours voisine de la pression de suralimentation K. le moteur peut aussi être équipé d'une turbine à géométrie fixe et des moyens de valve commandée 40.

La vitesse des profils de came de la ou des soupapes d'échappement et de la ou des soupapes d'admission est sensiblement plus élevée que dans l'exemple de la figure 5 et celui de la figure 8.

Comme il a été mentionné précédemment, le diagramme de distribution propre au cycle à deux temps se distingue de celui du cycle à quatre temps par le fait que la courbe 27, 26 en tirets de levée de la soupape d'échappement 6 est confondue en une seule courbe ; de façon analogue aux diagrammes de moteurs quatre temps présentés aux figures 5 à 9, la phase de fin d'ouverture 26, après la fermeture de la soupape d'admission, selon la levée 25 en trait plein, correspond à la phase de post-remplissage de la courbe 26, tandis que la phase d'ouverture simultanée des soupapes d'échappement et d'admission correspond au début de la phase d'ouverture 26, c'est-à-dire à la phase de balayage, non seulement du cylindre mais également, comme pour le moteur quatre temps, de la tubulure d'échappement 1e.

Le niveau de pression instantanée 21, selon la pointe S, atteint dans le collecteur d'échappement dépasse sensiblement la valeur atteinte à la figure 5, pour un niveau de pression de suralimentation 20 comparable ; ce fait s'explique principalement par l'ouverture précoce de la soupape d'échappement et par sa vitesse d'ouverture.

L'effet de post-remplissage obtenu est très important, puisque durant cette phase, le remplissage s'accroît de près de 50 % par rapport à la valeur atteinte à la fermeture de la soupape d'admission.

Aux régimes supérieurs, des conditions de balayage du cylindre satisfaisantes sont maintenues pendant toute la durée d'ouverture de la soupape d'admission, grâce au choix approprié de la taille de la turbine ; l'effet de post-remplissage, comme pour le moteur à quatre temps, diminue puis disparaît avec l'augmentation du régime, mais le niveau maximal de pression de suralimentation admissible peut être beaucoup plus élevé que dans l'exemple du moteur quatre temps (2 bars abs), en raison de la fermeture tardive de la soupape d'échappement.

Dans le cas d'un moteur deux temps selon l'invention, dans lequel trois, respectivement quatre, cylindres seraient regroupés sur une même entrée turbine, les durées angulaires d'ouverture de la levée 27, 26 de la soupape d'échappement et de la levée 25 de la soupape d'admission seraient réduits d'environ 60°, respectivement 90°, par rapport à l'exemple de la figure 18, pour tenir compte de la différence de calage entre les cylindres.

Le diagramme de distribution de la figure 18 permet au moteur deux temps, selon l'invention, de fonctionner dans tout son domaine de fonctionnement uniquement avec le turbocompresseur comme source d'air de balayage ; une soufflante auxiliaire n'est pas nécessaire.

Compte tenu de la grande diversité des cas auxquels l'invention peut s'appliquer, on comprendra qu'il est superflu de définir de façon détaillée les différents diagrammes d'ouverture de soupape qui conviennent à chaque cas.

Il est important de comprendre que l'effet de post-remplissage dépend de la position angulaire, dans le cycle de remplissage du cylindre 1, de la zone de forte pression 29 et de la pointe S de la pression instantanée 21 dans le collecteur d'échappement, ainsi que du niveau de pression atteint par la pointe S.

Or, le niveau de pression et la position angulaire de la pointe S dépendent, comme on a pu le constater sur les différents exemples présentés, de plusieurs facteurs. Ils dépendent naturellement du calage angulaire, variable selon les types de groupement de cylindres sur une même entrée turbine, entre le cylindre 1 et le cylindre provoquant la zone de forte pression 29 ; ils dépendent aussi dans une large mesure de la vitesse d'ouverture de la soupape d'échappement et de la section de passage offerte par la turbine ; ils dépendent dans une plus faible mesure du volume du collecteur d'échappement.

Tous les exemples présentés visent une amélioration du remplissage du cylindre dans la zone des bas régimes, et en particulier une "adpatation" de l'invention aux alentours du tiers du régime maximal du moteur, comme visible aux figures 5, 6, 8 et 18, c'est-à-dire dans la zone où les moteurs suralimentés par turbocompresseur souffrent d'une pression de suralimentation insuffisante.

Pour tous ces exemples, on observe que la position angulaire de la pointe S correspond, selon le cas, sensiblement à un angle compris entre l'angle de fermeture de la soupape d'admission selon la courbe 25 et l'angle de fermeture de la levée de la soupape d'échappement selon la courbe 26.

L'angle de la fermeture admission sera généralement positionné entre 10° et 30° de vilebrequin avant la fin de l'ouverture 26.

L'invention permet d'obtenir un fort couple au régime où se produit le post-remplissage, en particulier à bas régime dans les exemples considérés.

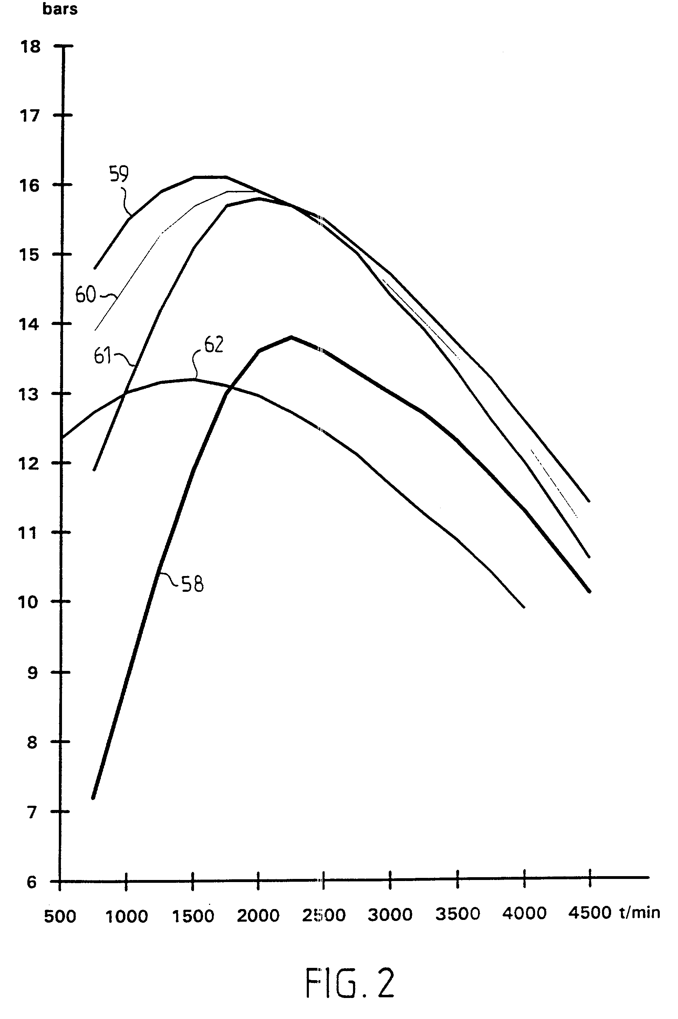

Ce résultat important est illustré à la figure 2 qui représente les variations de la pression moyenne effective dans un cylindre de moteur Diesel suralimenté classique, et selon l'invention, pour un moteur du type automobile, tel que celui des figures 5, 6, 7 et 18. On rappelle que la pression moyenne effective est égale au quotient du travail fourni dans un cycle, par la cylindrée. Dans tous les exemples présentés, chaque cylindre est équipé de deux soupapes d'échappement et de deux soupapes d'admission et d'un système de combustion à préchambre.

La courbe 58 correspond à un moteur suralimenté classique ; les courbes 59, 60, 61 correspondent au cas d'un moteur suralimenté quatre temps, selon l'invention avec respectivement deux, quatre et six cylindres branchés sur un même collecteur d'échappement ; la courbe 62 correspond au cas d'un moteur suralimenté deux temps, selon l'invention avec deux cylindres branchés sur un même collecteur d'échappement.

A bas régime, la pression moyenne effective selon l'invention est très supérieure à celle d'un moteur suralimenté classique. Le couple du moteur, proportionnel à cette pression moyenne effective, est donc considéralement augmenté à bas régime.

Il serait également envisageable de réaliser un effet de post-remplissage dans le cas d'un moteur non suralimenté par turbocompresseur mais disposant d'un potentiel de balayage de la tubulure d'échappement 1e, par exemple à l'aide des effets dynamiques de pression par "accord" des tubulures d'admission comme dans le cas d'un moteur de course fonctionnant à très haut régime ; un branchement par trois cylindres pour un moteur quatre temps serait alors également possible compte tenu des diagrammes de levées de soupapes très "ouverts" ; bien entendu le régime d'adaptation choisi serait alors situé dans la plage de régimes correspondant à celle où le couple maximum est recherché, en pratique dans la moitié supérieure de ladite plage.

On comprendra également que tout dispositif de commande variable d'ouvertures des soupapes d'échappement 27, 26 et/ou d'admission 25 pourrait présenter, dans certains cas, une souplesse supplémentaire pour améliorer l'adaptation de l'invention.

En se reportant à la figure 19, on peut voir une variante de réalisation du moteur de la figure 1. Cette variante reprend tous les éléments décrits à propos de la figure 1 et désignés par les mêmes références numériques, sans que leur description soit reprise.

Selon cette variante, en outre, le moteur est équipé d'une soufflante additionnelle 63, avantageusement entraînée par un moteur électrique de faible puissance, intégré, ainsi qu'un filtre à air, à la soufflante, ou d'un compresseur mécanique 64, représenté en tirets, entraîné par l'arbre moteur.

La soufflante 63, lorsqu'elle est en action, débite dans une canalisation 65 reliée à l'entrée 12 du compresseur C du turbocompresseur. Un clapet 66 est monté sur la tubulure d'entrée du compresseur C, en amont du raccordement de la canalisation 65. La fermeture du clapet 66 est commandée pendant la mise en marche de la soufflante 63 pour éviter un reflux éventuel, de l'air débité par la soufflante, du côté de la tubulure d'entrée 12 opposé au compresseur C. La soufflante 63 est d'un faible rapport de pression maxi, notamment de l'ordre de 1,02/1,03, et est constituée par exemple par un compresseur centrifuge à deux ou trois étages. Des moyens de commande 67 sont prévus pour la mise en marche de la soufflante 63 en fonction du régime du moteur. Généralement la soufflante 63 est mise en marche aux bas régimes ou aux très bas régimes de fonctionnement.

La soufflante 63 permet alors un post-remplissage sans turbocompresseur, ou constitue une assistance du turbocompresseur.

La soufflante 63 améliore le post-remplissage avec turbocompresseur pour les très bas régimes où le potentiel de balayage est limité, voire inexistant ou négatif, en raison de l'insuffisance de différences de pressions de balayage entre l'admission et l'échappement.

L'utilisation de la soufflante 63 est particulièrement intéressante pour un moteur deux temps, au régime ralenti.

Pour un régime transitoire, notamment pour une accélération, évoqué précédemment, le turbocompresseur présente une certaine mollesse ; en effet, l'augmentation de pression à la sortie du compresseur C s'effectue avec un certain retard par rapport à la demande de montée en pression d'air au niveau de l'admission du moteur. Pour améliorer le comportement du moteur, notamment lors des accélérations à bas régimes, on prévoit un étage haute pression HP avec un compresseur mécanique 64 débitant dans la tubulure d'admission du moteur, en aval du réfrigérant 14. Dans ce cas, la fonction qui était assurée par la soufflante 63 est reprise et amplifiée par le compresseur 64, de sorte que la soufflante 63 devient inutile.

Le compresseur mécanique 64 peut également intervenir, pour améliorer le post-remplissage avec turbo, lors des phases transitoires, en particulier lors d'une accélération, ou lors de l'utilisation temporaire à couple maxi, en particulier aux bas et moyens régimes.

En pratique, le compresseur mécanique sera enclenché soit en période transitoire à partir ou au-delà d'un certain seuil d'accélération (au-delà d'un appel de charge donné, par exemple au-delà d'une variation de position d'accélérateur) ou en régime permanent pour réaliser un couple supérieur au couple réalisable avec turbocompresseur seul (domaine de surpuissance). Pour tout autre fonctionnement, et notamment en régime stabilisé (permanent), le compresseur mécanique sera de préférence débrayé pour que le rendement du moteur soit maximal.

Comme illustré sur la figure 20, le compresseur mécanique 64 est entraîné à partir de l'arbre de sortie 68 du moteur M, par exemple par une courroie crantée 69 et par l'intermédiaire d'un embrayage électro-mécanique 69a. L'entrée d'air 70 du compresseur 64 est reliée, en amont, au refoulement du réfrigérant 14 et, en aval, à une canalisation de by-pass 71, munie d'un clapet 72.

La sortie 73 d'air comprimé du compresseur mécanique 64 est reliée, par l'intermédiaire d'un réfrigérant 74, à l'admission d'air A du moteur M. La canalisation de by-pass 71 est reliée à l'entrée du réfrigérant 74.

Le compresseur mécanique 64 peut fournir un rapport de pression allant jusqu'à 2 environ.

La mise en service du compresseur 64 s'opère par enclenchement de l'embrayage 69a et fermeture du clapet 72, en réponse à l'action de moyens de commande 67a. L'air fourni à l'admission A est celui provenant de la sortie 73 du compresseur 64. Lorsque le clapet 72 est ouvert, le compresseur 64 est court-circuité.

Il est à noter que le compresseur mécanique 64 pourrait être utilisé seul, sans le turbocompresseur, pour suralimenter le moteur, dans le cadre de l'invention.

La disposition en étage haute pression du compresseur mécanique 64 est préférée, car elle permet, notamment, même si le compresseur 64 est débrayé, d'utiliser en série les deux réfrigérants 14 et 74 sur l'air comprimé venant du turbocompresseur. Toutefois, le compresseur mécanique pourrait être prévu en étage basse pression.

En se reportant aux figures 21 et 22, on peut voir une réalisation améliorée du dispositif de type "pulse converter" à étranglement de la figure 16.

Sur la figure 21, on retrouve le schéma de l'étranglement 52 sur le collecteur d'échappement en amont de l'entrée 9 de la turbine. Les mêmes éléments sont désignés par les mêmes références numériques sans que leur description soit reprise.

Dans une conception classique de "waste-gate", celle-ci serait installée comme schématiquement représenté par le cercle 75 en tirets, en aval de l'étranglement 52, juste à l'entrée de la turbine.

Il est avantageux selon l'invention d'utiliser un nombre de soupapes "waste-gate", pour une entrée de turbine, égal au nombre de branches 53, 54 de deux cylindres regroupées sur une même entrée, et de placer ces soupapes "waste-gate" en amont de l'étranglement 52.

Dans l'exemple considéré où deux branches 53, 54 de deux cylindres sont regroupées sur la même entrée de turbine, on implante deux soupapes "waste-gate" 76, 77, à savoir respectivement une soupape dans chaque branche 53, 54 dans chaque zone d'étranglement 55, 56, en amont immédiat de l'étranglement 52.

De préférence, les soupapes 76 et 77 restent implantées dans le carter de la turbine T ce qui signifie que l'étranglement 52 est situé à l'intérieur de l'entrée du carter turbine, entrée dans laquelle pénètre la cloison 57.

Les soupapes 76 et 77 sont commandées simultanément par un même moyen de commande, notamment un vérin pneumatique.

Selon la représentation schématique de la figure 21, les deux soupapes 76, 77 sont disposées côte-à-côte, ce qui facilite la commande par tringlerie.

Il est possible de disposer les soupapes 76 et 77 comme illustré sur la figure 22, opposées l'une à l'autre, les soupapes étant constituées par des volets articulés autour d'axes perpendiculaires au plan de la figure 22, selon le bord amont de chaque volet. Cette disposition facilite l'écoulement, en position ouverte des soupapes, de l'air vers la dérivation court-circuitant la turbine.

A hauts régimes et forts débits, les soupapes 76 et 77 sont ouvertes, comme une soupape classique, puisqu'il s'agit d'un domaine de fonctionnement du moteur où il ne faut pas avoir de contre-balayage durant la réouverture de la soupape d'échappement.

Grâce à la présence des deux soupapes 76, 77 en amont de l'étranglement 52, on obtient l'avantage d'une diminution du freinage de l'écoulement des gaz, et donc de la contre-pression instantanée vue par le cylindre en phase d'échappement. Ceci est dû à l'accroissement de la section offerte à l'ouverture des soupapes 76 et 77 et à la disposition de ces soupapes en amont de l'étranglement 52 ; seul le débit de gaz traversant la turbine T subira l'étranglement, alors que le débit délivré par les soupapes ouvertes 76 et 77 n'est pas soumis à l'étranglement et n'est pas freiné.

Un autre avantage est le suivant. On considère, par exemple, un cylindre dont l'échappement est relié à la branche 53. Pendant la course d'aspiration point mort haut/point mort bas du piston de ce cylindre, la soupape d'échappement est fermée ou réouverte durant la phase de croisement avec la soupape d'admission ; quand une bouffée se produit dans la branche 54, en raison de l'ouverture des soupapes 76 et 77 en amont de l'étranglement 52, la pression des gaz dans la branche 53 sans bouffée est abaissée car la zone d'étranglement 55, de la branche 53, est reliée par l'intermédiaire de la soupape 76 à la pression régnant à la sortie de la turbine, qui est beaucoup plus basse que celle régnant à l'entrée 9 de la turbine, en aval de l'étranglement 55. Le cylindre considéré, relié à cette branche 53, est ainsi protégé de la bouffée de la ligne voisine 54.

Ce résultat est concrétisé sur la figure 23 par la courbe en tirets 21' illustrant la pression dans la branche 53 au niveau de l'échappement du cylindre considéré, dans le cas où les deux soupapes 76, 77 sont présentes. La courbe en trait plein 21" correspond au cas où une seule soupape "waste-gate" serait placée au niveau du cercle 75 sur la figure 21. Il apparaît, d'après ces courbes, que la bouffée intermédiaire B' provoquée dans la branche 53 par la ligne voisine 54 est beaucoup plus faible que la bouffée B". A titre de comparaison, on a reproduit en trait mixte sur la figure 21, la courbe 21 de la figure 7 correspondant au même cas de fonctionnement avec même turbine équipée d'une "waste-gate", mais sans "pulse converter". La bouffée intermédiaire B est plus forte et donc plus perturbante.

La présence des deux soupapes 76, 77, disposées en amont de l'étranglement 52 permet d'utiliser une taille de turbine plus faible sans risque de contre-balayage à hauts régimes, et d'obtenir ainsi un couple plus élevé aux très bas régimes.

On a indiqué, à propos de la figure 5, que la pression de suralimentation instantanée régnant à l'admission de chacun des cylindres était considérée et représentée, par simplification, constante en fonction du temps (droite 20). Ceci est d'autant plus vrai que le régime du moteur est bas. Aux régimes plus élevés, et en particulier lorsqu'on utilise des tubulures d'admission accordées pour les hauts régimes (c'est-à-dire des tubulures d'admission, telles que la, de longueurs telles que des fluctuations de la pression d'admission s'établissent à haut régime), on peut obtenir des fluctuations de pression à l'admission comme représenté sur la figure 23, par la courbe en pointillé 20a, la moyenne de ces fluctuations correspondant à la droite 20. De manière classique, ces fluctuations sont utilisées pour accroître le remplissage du cylindre à haut régime. Dans le cadre de l'invention, il est judicieux d'en faire la même utilisation ; mais, de plus, on bénéficie d'un avantage supplémentaire résultant de la différence de pression instantanée positive entre l'admission 20a et l'échappement 21, 21' 21" au moment de la réouverture de la soupape d'échappement. Ceci permet soit de maintenir un petit balayage à haut régime, comme représenté figure 23, soit de diminuer encore la taille de la turbine sans contre-balayage.

## Revendications

1. Procédé pour améliorer le fonctionnement d'un moteur thermique suralimenté, principalement par turbocompresseur, sous une pression moyenne de suralimentation et balayé avec de l'air, moteur dans lequel l'ouverture et la fermeture de l'échappement des cylindres sont assurées par soupape d'échappement et dans lequel on assure une ouverture de la soupape d'échappement (6) d'un cylindre (1) en cours d'aspiration ou de remplissage pour assurer un balayage tubulure d'admission (1a)/cylindre/(1)/tubulure d'échappement (1e) durant t'ouverture simultanée de la soupape ou lumière d'admission (5) et de la soupape d'échappement (6), caractérisé par le fait:
que, sur un même collecteur (8, 10) de gaz d'échappement, on regroupe un nombre de cylindres (2, 3 ; 1, 4) tel que la pression dans la tubulure d'échappement (1e) présente, en fonction du temps, des fluctuations (28, 29) d'amplitudes sensibles;
que l'on assure 1' ouverture de la soupape d'échappement (6) d'un cylindre (1) qui est en cours d'aspiration ou de remplissage de manière telle que pour une plage de régime déterminée, une phase (28) de faible pression d'échappement instantanée inférieure à la pression moyenne de suralimentation (20), présente dans la tubulure d'échappement permette d'assurer le balayage tubulure d'admission (1a)/cylindre/(1)/tubulure d'échappement (1e) durant l'ouverture simultanée de la soupape ou lumière d'admission (5) et de la soupape d'échappement (6), et qu'une phase (29) de forte pression d'échappement instantanée supérieure à la pression moyenne de suralimentation (20), due à un autre cylindre, après fermeture de la soupape ou lumière d'admission (5) et autant que la soupape d'échappement (6) est encore ouverte, est utilisée pour effectuer un post-remplissage du cylindre (1) avec l'air (A) préalablement stocké dans la tubulure d'échappement (1e),
et que la taille de la turbine (T) est choisie pour qu'à des régimes supérieurs à la susdite plage déterminée, il n'y ait pratiquement pas de post-remplissage du cylindre (1) avec des gaz d'échappement.

2. Moteur thermique suralimenté, principalement par turbocompresseur, sous une pression moyenne de suralimentation et balayé avec de l'air, moteur dans lequel l'ouverture et la fermeture de l'échappement des cylindres sont assurées par soupape d'échappement et qui comporte des moyens d'ouverture de la soupape d'échappement (6) d'un cylindre (1) en cours d'aspiration ou de remplissage pour assurer un balayage tubulure d'admission (1a)/cylindre/(1)/tubulure d'échappement (1e) durant l'ouverture simultanée de la soupape ou lumière d'admission (5) et de la soupape d'échappement (6), moteur agencé pour la mise en oeuvre du procédé selon la revendication 1, caractérisé par le fait:
qu'il comporte un nombre de cylindres, branchés sur un même collecteur de gaz d'échappement, tel que la pression dans la tubulure d'échappement (1e) présente, en fonction du temps, des fluctuations (28, 29) d'amplitudes sensibles,
et que les moyens (31, 34) d'ouverture de la soupape d'échappement (6) d'un cylindre (1) qui est en fin d'aspiration ou de remplissage réalisent l'ouverture de manière telle qu'à bas régime une phase (28) de faible pression d'échappement instantanée inférieure à la perssion moyenne de suralimentation (20), présente dans la tubulure d'échappement, et due à un autre cylindre, permette d'assurer un balayage tubulure d'admission(la) /cylindre (1)/ tubulure d'échappement (1e) durant l'ouverture simultanée de la soupape ou lumière d'admission (5) et de la soupape d'échappement (6),. et qu'une phase (29)de forte pression d'échappement instantanée supérieure à la pression moyenne de suralimentation, après fermeture de la soupape ou lumière d'admission (5) et autant que la soupape d'échappement (6) est encore ouverte, est utilisée pour effectuer un post-remplissage du cylindre (1) avec l'air (A) préalablement stocké dans la tubulure d'échappement (1e) ,
et que la taille de la turbine (T) est choisie pour qu'à des régimes supérieurs à la susdite plage déterminée, il n'y ait pratiquement pas de post-remplissage du cylindre (1) avec des gaz d'échappement.

3. Moteur selon la revendication 2; caractérisé par le fait que la fermeture de la soupape d'échappement (6) (fin de la levée d'ouverture (26)) a lieu au plus tôt à l'instant de la pointe de pression (S) dans la tubulure d'échappement et, au plus tard, 30° de vilebrequin après cette pointe de pression (S).

4. Moteur selon la revendication 3, caractérisé par le fait que la fermeture de la soupape d'admission (5) (fin de la levée de l'ouverture (25)) a lieu entre 30° et 10° de vilebrequin avant la fin de la levée d'ouverture (26) de la soupape d'échappement (6).

5. Moteur quatre temps selon l'une des revendications 2 à 4, dans lequel la soupape d'échappement (6) est fermée après le début de la phase d'aspiration, caractérisé par le fait que la soupape d'échappement (6) est réouverte dans la fin de la phase d'aspiration.

6. Moteur quatre temps selon la revendication 5, caractérisé par le fait que, pour la réouverture de la soupape d'échappement (6) d'un cylindre (1), une came (31) est prévue avec une bosse (34) dont l'étendue angulaire ( α ) est choisie aussi grande que possible pour rester compatible avec une absence de contre-balayage à plein régime.

7. Moteur quatre temps selon la revendication 5 ou 6, caractérisé par le fait que le nombre de cylindres groupés sur un même collecteur d'échappement, aboutissant à une seule entrée turbine, est au plus égal à sept.

8. Moteur quatre temps selon la revendication 5 ou 6, caractérisé par le fait que, sur un même collecteur d'échappement, aboutissant à une seule entrée turbine, sont groupés deux cylindres calés à 360° de vilebrequin.

9. Moteur quatre temps selon la revendication 5 ou 6, caractérisé par le fait que, sur un même collecteur d'échappement, aboutissant à une seule entrée turbine, sont groupés quatre cylindres calés à 180° de vilebrequin.

10. Moteur quatre temps selon la revendication 5 ou 6, caractérisé par le fait que, sur un même collecteur d'échappement, abrutissant à une seule entrée turbine, sont groupés six cylindres calés à 120° de vilebrequin.

11. Moteur selon l'une des revendications 2 à 4, caractérisé par le fait que les cylindres regroupés sur un même collecteur ont des écarts d'allumage tels que lorsqu'un premier cylindre (1) est en fin d'aspiration, un autre cylindre (4) est en début d'échappement, la "bouffée" créée par cet autre cylindre (4) dans le collecteur d'échappement assurant le post-remplissage du premier cylindre (1).

12. Moteur cieux temps à soupapes d'échappement et d'admission selon la revendication 11, caractérisé par le fait que l'ouverture de la soupape d'échappement est maintenue au-delà de la fermeture de la soupape d'admission pour pouvoir bénéficier de la "bouffée" d'un autre cylindre, regroupé sur le même collecteur d'échappement, après la phase de balayage.

13. Moteur deux temps selon la revendication 12, caractérisé par le fait que, sur un même collecteur d'échappement, sont groupés deux cylindres calés à 180° de vilebrequin.

14. Moteur deux temps selon la revendication 12, caractérisé par le fait que, sur un même collecteur d'échappement, sont groupés trois cylindres calés à 120° de vilebrequin.

15. Moteur selon l'une des revendications 2 à 14, caractérisé par le fait qu'un volet d'étranglement (36), dont la fermeture ou l'ouverture est assurée par des moyens de commande (37) selon le régime du moteur, est prévu sur l'échappement (16) de la turbine.

16. Moteur selon l'une des revendications 2 à 15, caractérisé par le fait qu'une canalisation de liaison (38) est prévue entre la canalisation (13) du compresseur (C) et la ou les tubulures d'entrée (8, 10) de la turbine, un clapet anti-retour (39) étant monté dans la tubulure (38), des moyens de valve commandée (40) étant prévus sur cette tubulure (38).

17. Moteur selon la revendication 16, caractérisé par le fait que les moyens de valve commandée (40) sont pilotés par la pression de suralimentation (K) et la moyenne (G) de la pression instantanée dans le collecteur d'échappement pour ouvrir une soupape (41) contrôlant l'ouverture de la canalisation de liaison (38), de sorte que lesdites pressions de suralimentation (K) et moyenne (G) restent sensiblement égales dans une zone située en dessous d'un seuil de pression de suralimentation maximum.

18. Moteur selon l'une quelconque des revendications 2 à 17 comportant plus de deux cylindres branchés sur un même collecteur d'échappement et sur une même entrée de turbine, caractérisé par le fait qu'un étranglement (52. 55, 56, 57) est réalisé sur les tubulures (53, 54) des cylindres, respectivement (1, 4) et (2, 3).

19. Moteur selon la revendication 18, caractérisé par le fait qu'il comporte un nombre de soupapes "waste-gate" (76, 77), pour une entrée de turbine, égal au nombre de branches (53, 54) de deux cylindres regroupées sur une même entrée, ces soupapes "waste-gate" (76, 77) étant placées en amont de l'étranglement (52).

20. Moteur selon l'une des revendications 2 à 19, caractérisé par le fait que la tubulure d'échappement (le), au voisinage de la soupape d'échappement (6), a une forme (35) apte à provoquer un tourbillon dans le cylindre (1) lors de la phase de post-remplissage.

21. Moteur selon l'une des revendications 2 à 20, caractérisé par le fait qu'il est équipé d'une soufflante additionnelle (63) ou d'un compresseur mécanique (64) entraîné par l'arbre moteur.

22. Moteur selon la revendication 21 comprenant un compresseur mécanique (64), caractérisé par le fait que le compresseur mécanique (64) fait partie d'un étage haute pression, comportant un réfrigérant (74) et des moyens de branchement (71, 72) de ce réfrigérant (74) entre la sortie (73) du compresseur et l'admission d'air (A) du moteur, tels que le réfrigérant (74) soit traversé en permanence par l'air d'alimentation, que le compresseur mécanique (64) soit enclenché ou non.

23. Moteur selon l'une des revendications 2 à 20, caractérisé par le fait que les tubulures d'admission sont accordées pour les hauts régimes.

## Patentansprüche

1. Verfahren zur Verbesserung des Betriebsverhaltens eines unter einem mittleren Ladedruck vornehmlich durch einen Abgasturbolader aufgeladenen und luftgespülten Verbrennungsmotors, bei dem Auslaßventile den Auslaß der Zylinder steuern, wobei das Auslaßventil (6) eines Zylinders (1) beim Ansaugen bzw. beim Füllvorgang geöffnet ist, um eine Durchspülunq von Einlaßleitung (1a) /Zylinder (1) /Auslaßleitung (1e) bei gleichzeitiger Öffnung des Einlaßventils bzw. -schlitzes (5) und des Auslaßventils (6) zu bewirken,
dadurch gekennzeichnet, daß an ein und dem selben Auslaßkrümmer (8, 10) mehrere Zylinder (2, 3; 1, 4) zusammengefaßt werden, so daß der Druck in der Auslaßleitung (le) zeitabhängige Schwankungen (28, 29) deutlicher Amplituden aufweist;
und dadurch, daß das Auslaßventil (6) eines Zylinders (1) beim Ansaugen bzw. beim Füllvorgang geöffnet ist, damit in einem bestimmten Drehzahlbereich eine Phase (28) niedrigen momentanen Abgasdrucks in der Auslaßleitung, und zwar geringer als der mittlere Ladedruck (20) , eine Durchspülung von Einlaßleitung (1a) /Zylinder (1) /Auslaßleitung (1e) bei gleichzeitiger Öffnung des Einlaßventils bzw. -schlitzes (5) und des Auslaßventils (6) bewirken kann; ferner dadurch gekennzeichnet, daß die durch einen anderen Zylinder erzeugte Phase (29) hohen momentanen Abgasdrucks, und zwar höher als der mittlere Ladedruck (20), nach Schließen des Einlaßventils bzw. -schlitzes genutzt wird, solange das Auslaßventil (6) noch geöffnet ist, um ein Nachladen des Zylinders (1) mit der zuvor in der Auslaßleitung (1e) gesammelten Luft (A) zu bewirken,
und dadurch, daß die Größe der Turbine (T) derart gewählt wird, daß es bei Drehzahlen oberhalb des vorstehend festgelegten Drehzahlbereichs praktisch zu keinem Nachladen des Zylinders (1) mit Abgasen kommt.

2. Auf das Verfahren nach Anspruch 1 abgestimmter Verbrennungsmotor, der unter einem mittleren Ladedruck vornehmlich durch einen Abgasturbolader aufgeladen und luftgespült ist, bei dem Auslaßventile den Auslaß der Zylinder steuern, und der über Vorrichtungen zur Öffnung des Auslaßventils (6) eines Zylinders (1) beim Ansaugen bzw. beim Füllvorgang verfügt, um eine Durchspülung von Einlaßleitung (1a) /Zylinder (1) /Auslaßleitung (1e) bei gleichzeitiger Öffnung des Einlaßventils bzw. -schlitzes (5) und des Auslaßventils (6) zu bewirken,
dadurch gekennzeichnet, daß er mehrere an ein und demselben Auslaßkrümmer angeschlossene Zylinder besitzt, so daß der Druck in der Auslaßleitung (1e) zeitabhängige Schwankungen (28, 29) deutlicher Amplituden aufweist;
und dadurch, daß die Vorrichtungen (31, 34) zur Öffnung des Auslaßventils (6) eines Zylinders (1) am Ende des Ansaugtaktes bzw. des Füllvorgangs so ausgelegt sind, daß im unteren Drehzahlbereich eine durch einen anderen Zylinder erzeugte Phase (28) niedrigen momentanen Abgasdrucks in der Auslaßleitung, und zwar geringer als der mittlere Ladedruck (20), eine Durchspülung von Einlaßleitung (1a) /Zylinder (1) /Auslaßleitung (1e) bei gleichzeitiger Öffnung des Einlaßventils bzw. -schlitzes (5) und des Auslaßventils (6) bewirken kann; ferner dadurch gekennzeichnet, daß die Phase (29) hohen momentanen Abgasdrucks, und zwar höher als der mittlere Ladedruck (20), nach Schließen des Einlaßventils bzw. -schlitzes genutzt wird, solange das Auslaßventil (6) noch geöffnet ist, um ein Nachladen des Zylinders (1) mit der zuvor in der Auslaßleitung (1e) gesammelten Luft (A) zu bewirken,
und dadurch, daß die Größe der Turbine (T) derart gewählt wird, daß es bei Drehzahlen oberhalb des vorstehend festgelegten Drehzahlbereichs praktisch zu keinem Nachladen des Zylinders (1) mit Abgasen kommt.

3. Motor nach Anspruch 2, daurch gekennnzeichnet, daß das Schließen des Auslaßventils (6) (Ende des Öffnungshubs (26)) frühestens im Augenblick des höchsten Drucks (S) in der Auslaßleitung und spätestens 30° Kurbelwinkel nach dieser Druckspitze (S) erfolgt.

4. Motor nach Anspruch 3, dadurch gekennzeichnet, daß das Schließen des Einlaßventils (5) (Ende des Öffnungshubs (25)) zwischen 30° und 10° Kurbelwinkel vor Ende des Öffnungshubs (26) des Auslaßventils (6) erfolgt.

5. Viertaktmotor nach einem der Ansprüche 2 bis 4, bei dem das Auslaßventil (6) nach Beginn des Ansaugtaktes geschlossen wird, dadu:rch gekennnzeichnet, daß das Auslaßventil (6) am Ende des Ansaugtaktes wieder geöffnet wird.

6. Viertaktmotor nach Anspruch 5, dadurch gekennzeichnet, daß für das Wiederöffnen des Auslaßventils (6) eines Zylinders (1) ein Nocken (31) mit einem Nachnocken (34) vorgesehen ist, dessen Winkel (α) so groß wie möglich gewählt wird, um eine Gegenstromspülung bei maximaler Drehzahl zu verhindern.

7. Viertaktmotor nach Anspruch 5 oder 6, dadurch gekennzeichnet, daß die Zahl der an ein und demselben Auslaßkrümmer zusammengefaßten Zylinder, der zu einem einzigen Turbinengaseintritt führt, höchstens sieben beträgt.

8. Viertaktmotor nach Anspruch 5 oder 6, dadurch gekennzeichnet, daß an ein und demselben Auslaßkrümmer, der zu einem einzigen Turbinengaseintritt führt, zwei Zylinder mit einem Zündabstand von 360° zusammengefaßt sind.

9. Viertaktmotor nach Anspruch 5 oder 6, dadurch gekennzeichnet, daß an ein und demselben Auslaßkrümmer, der zu einem einzigen Turbinengaseintritt führt, vier Zylinder mit einem Zündabstand von 180° zusammengefaßt sind.

10. Viertaktmotor nach Anspruch 5 oder 6, dadurch gekennzeichnet, daß an ein und demselben Auslaßkrümmer, der zu einem einzigen Turbinengaseintritt führt, sechs Zylinder mit einem Zündabstand von 120° zusammengefaßt sind.

11. Viertaktmotor nach Anspruch 2 bis 4, dadurch gekennzeichnet, daß die an ein und demselben Auslaßkrümmer zusammengefaßten Zylinder derartige Zündabstände haben, daß, wenn bei einem ersten Zylinder (1) das Ende des Ansaugtaktes erreicht wird, der Auslaßbeginn eines zweiten Zylinders (4) erfolgt und der von diesem zweiten Zylinder im Auslaßkrümmer erzeugte "Vorauslaßstoß" das Nachladen des ersten Zylinders (1) bewirkt.

12. Zweitaktmotor mit Auslaß- und Einlaßventilen nach Anspruch 11, dadurch gekennzeichnet, daß das Auslaßventil noch offen gehalten wird, wenn das Einlaßventil bereits geschlossen wurde, um nach der Spülphase den "Vorauslaßstoß" eines anderen an demselben Auslaßkrümmer angeschlossenen Zylinders nutzen zu können.

13. Zweitaktmotor nach Anspruch 12, dadurch gekennzeichnet, daß an ein und demselben Auslaßkrümmer zwei Zylinder mit einem Zündabstand von 180° zusammengefaßt sind.

14. Zweitaktmotor nach Anspruch 12, dadurch gekennzeichnet, daß an ein und demselben Auslaßkrümmer drei Zylinder mit einem Zündabstand von 120° zusammengefaßt sind.

15. Motor nach nach einem der Ansprüche 2 bis 14, dadurch gekennzeichnet, daß am Auslaß (16) der Turbine eine Drosselklappe (36) angebracht ist, die motordrehzahlabhängig durch Steuergeräte (37) geschlossen oder geöffnet wird.

16. Motor nach nach einem der Ansprüche 2 bis 15, dadurch gekennzeichnet, daß zwischen der Auslaßleitung (13) des Verdichters (C) und der bzw. den Einlaßleitungen (8, 10) der Turbine eine Verbindungsleitung (38) vorgesehen ist, wobei in der Leitung (38) ein Rückschlagventil (39) eingebaut ist und an dieser Leitung (38) Steuerventilteile (40) vorgesehen sind.

17. Motor nach Anspruch 16, dadurch gekennzeichnet, daß die Steuerventilteile (40) durch den Ladedruck (K) und den Mittelwert (G) des momentanen Abgasdrucks im Auslaßkrümmer geregelt werden, um ein Ventil (41) zu öffnen, das die Öffnung der Verbindungsleitung (38) kontrolliert, damit dieser Ladedruck (K) und dieser mittlere Druck (G) in einem unter einem maximalen Ladedruckgrenzwert liegenden Bereich einander ähnlich bleiben.

18. Motor nach irgendeinem der Ansprüche 2 bis 17 mit mehr als zwei an ein und demselben Auslaßkrümmer und an einem einzigen Turbinengaseintritt zusammengefaßten Zylindern, dadurch gekennzeichnet, daß an den Strängen (53, 54) der Zylinder (1, 4) bzw. (2, 3) eine Querschnittsverengung (52, 55, 56, 57) angebracht ist.

19. Motor nach Anspruch 18, dadurch gekennzeichnet, daß er für einen Turbinengaseintritt eine Anzahl von "Wastegate"-Ventilen (76, 77) besitzt, die der Anzahl der von zwei Zylindern kommenden und an ein und demselben Gaseintritt zusammengefaßten Stränge (53, 54) entspricht, und daß diese "Wastegate"-Ventile (76, 77) stromaufwärts der Querschnittsverengung (52) gelegen sind.

20. Motor nach nach einem der Ansprüche 2 bis 19, dadurch gekennzeichnet, daß die Auslaßleitung (1e) im Bereich des Auslaßventils (6) eine Form (35) aufweist, die bei der Nachladephase im Zylinder (1) drallerzeugend wirkt.

21. Motor nach einem der Ansprüche 2 bis 20, dadurch gekennzeichnet, daß er mit einem Zusatzgebläse (63) oder mit einem von der Antriebswelle angetriebenen mechanischen Lader (64) ausgerüstet ist.

22. Motor nach Anspruch 21 mit einem mechanischen Lader (64), dadurch gekennzeichnet, daß der mechanische Lader (64) zu einer Hochdruckstufe gehört, die einen Ladeluftkühler (74) und Anschlußvorrichtungen (71, 72) für diesen Ladeluftkühler (74) zwischen dem Verdichterauslaß (73) und dem Lufteinlaß (A) des Motors derart umfaßt, daß die Kühlvorrichtung (74) unabhängig davon, ob der mechanische Lader (64) zugeschaltet ist oder nicht, ständig von der Ladeluft durchströmt wird.

23. Motor nach einem der Ansprüche 2 bis 20, dadurch gekennzeichnet, daß die Einlaßleitungen bei hohen Drehzahlen abgestimmt sind.

## Claims

1. Method for improving the operation of an internal combustion engine, supercharged mainly by a turbocharger, with a mean boost pressure, and scavenged with air, engine in which the opening and the closing of the cylinder exhaust are provided by an exhaust valve and in which the exhaust valve (6) of a cylinder (1) is opened during induction or filling thereof in order to enable the inlet pipe (1a) /cylinder (1) /exhaust pipe (1e) to be scavenged while the inlet valve or inlet port (5) and the exhaust valve (6) are simultaneously open, characterised by the fact that:
a number of cylinders (2, 3; 1, 4) are grouped on a same exhaust gas manifold (8, 10) such that the pressure in the exhaust pipe (1e) undergoes time-dependent fluctuations (28, 29) of substantial amplitudes;
that the exhaust valve (6) of a cylinder (1) is opened during induction or filling thereof so that, in a given engine speed range, a phase (28) of low instantaneous exhaust pressure, which is lower than the mean boost pressure (20), prevailing in the exhaust pipe enables the inlet pipe (1a) /cylinder (1) /exhaust pipe (1e) to be scavenged while the inlet valve or inlet port (5) and the exhaust valve (6) are simultaneously open and that a phase (29) of high instantaneous exhaust pressure, which is higher than the mean boost pressure (20), caused by another cylinder, after the inlet valve or inlet port (5) has closed and while the exhaust valve (6) is still open, is used for post-charging the cylinder (1) with air (A) previously stored in the exhaust pipe (1e),
and that the size of the turbine (T) is selected so that there is virtually no post-charging of the cylinder (1) with exhaust gases at engine speeds above said given engine speed range.

2. Internal combustion engine, supercharged mainly by a turbocharger, with a mean boost pressure, and scavenged with air, engine in which the opening and the closing of the cylinder exhaust are provided by an exhaust valve and which comprises opening means of the exhaust valve (6) of a cylinder (1) during induction or filling thereof in order to enable the inlet pipe (1a) /cylinder (1) /exhaust pipe (1e) to be scavenged while the inlet valve or inlet port (5) and the exhaust valve (6) are simultaneously open, engine arranged for carrying out the method according to claim 1, characterised by the fact:
that it comprises a number of cylinders connected to a same exhaust gas manifold such that the pressure in the exhaust pipe (le) urdergoes time-dependent fluctuations (28, 29) of substantial amplitudes,
and that the opening means (31, 34) for the exhaust valve (6) of a cylinder (1) towards the end of induction or filling thereof realise the opening so that, at low engine speeds, a phase (28) of low instantaneous exhaust pressure, which is lower than the mean boost pressure (20) , prevailing in the exhaust pipe, and caused by another cylinder, enables the inlet pipe (1a) /cylinder (1) /exhaust pipe (1e) to be scavenged while the inlet valve or inlet port (5) and the exhaust valve (6) are simultaneously open and that a phase (29) of high instantaneous exhaust pressure, which is higher than the mean boost pressure, after the inlet valve or inlet port (5) has closed and while the exhaust valve (6) is still open, is used for post-charging the cylinder (1) with air (A) previously stored in the exhaust pipe (1e),
and that the size of the turbine (T) is selected so that there is virtually no post-charging of the cylinder (1) with exhaust gases at engine speeds above said given engine speed range.

3. Engine according to claim 2, characterised by the fact that the closing of the exhaust valve (6) (end of its opening lift (26)) occurs no sooner than the moment at which the pressure peak (S) is reached in the exhaust pipe and no later than 30° crank angle after the said pressure peak (S) is reached.

4. Engine according to claim 3, characterised by the fact that the closing of the inlet valve (5) (end of its opening lift (25)) occurs between 30° and 10° crank angle before the end of the opening lift (26) of the exhaust valve (6).

5. Four-stroke engine according to one of the claims 2 to 4, in which the exhaust valve (6) is closed after the beginning of the intake stroke, characterised by the fact that the exhaust valve (6) is re-opened towards the end of the intake stroke.

6. Four-stroke engine according to claim 5 characterised by the fact that, for re-opening the exhaust valve (6) of the cylinder (1), a cam (31) is provided with a lobe (34), the angular duration (α) of which is chosen to be as great as possible to keep on preventing backflow scavenging at full engine speed.

7. Four-stroke engine according to claim 5 or 6, characterised by the fact that the number of cylinders connected to a same exhaust manifold and leading to a single turbine inlet, is at the most seven.

8. Four-stroke engine according to claim 5 or 6, characterised by the fact that two cylinders, connected to a same exhaust manifold and leading to a single turbine inlet, are set at 360° crank angle.

9. Four-stroke engine according to claim 5 or 6, characterised by the fact that four cylinders, connected to a same exhaust manifold and leading to a single turbine inlet, are set at 180° crank angle.

10. Four-stroke engine according to claim 5 or 6, characterised by the fact that six cylinders, connected to a same exhaust manifold and leading to a single turbine inlet, are set at 120° crank angle.

11. Engine according to one of the claims 2 to 4, characterised by the fact that the cylinders connected to a same exhaust manifold have firing intervals such that, when a first cylinder (1) is at the end of the intake stroke, another cylinder (4) is at the beginning of the blowdown phase, the "pulse" generated by this other cylinder (4) in the exhaust manifold thus ensuring the post-charging of the first cylinder (1).

12. Two-stroke engine with exhaust and inlet valves according to claim 11, characterised by the fact that the exhaust valve is kept open after the inlet valve has closed in order to allow the utilisation of the "pulse" from another cylinder that is connected to the same exhaust manifold, after the scavenging phase.

13. Two-stroke engine according to claim 12, characterised by the fact that two cylinders, connected to a same exhaust manifold, are set at 180° crank angle.

14. Two-stroke engine according to claim 12, characterised by the fact that three cylinders, connected to a same exhaust manifold, are set at 120° crank angle.

15. Engine according to one of the claims 2 to 14, characterised by the fact that a throttle valve (36), the closing or the opening of which is assured by the control means (37) depending on the engine speed, is provided on the turbine outlet (16).

16. Engine according to one of the claims 2 to 15, characterised by the fact that a connecting duct (38) is provided between the pipe (13) of the compressor (C) and the inlet pipe(s) (8, 10) to the turbine, a non-return valve (39) being installed in the duct (38) and valve control means (40) being provided on this duct (38).

17. Engine according to claim 16, characterised by the fact that the valve control means (40) are governed by the boost pressure (K) and by the average (G) of the instantaneous pressure in the exhaust manifold in order to ensure the opening of a valve (41) which controls the opening of the connecting duct (38), so that the said boost pressure (K) and average pressure (G) remain approximately equal in a range situated below a maximum boost pressure threshold.

18. Engine according to any one of the claims 2 to 17 comprising more than two cylinders connected to a same exhaust manifold and to a same turbine inlet, characterised by the fact that a throat (52, 55, 56, 57) is provided for the pipes (53, 54) of the cylinders, respectively (1, 4) and (2, 3).

19. Engine according to claim 18, characterised by the fact that it comprises a number of "wastegate" valves (76, 77), for a turbine inlet, which is equal to the number of two-cylinder branches (53, 54) connected to a same inlet, these "wastegate" valves (76, 77) being located upstream of the throat (52).

20. Engine according to one of the claims 2 to 19, characterised by the fact that the exhaust pipe (1e), in the vicinity of the exhaust valve (6), with a shape (35) designed to generate a swirl in the cylinder (1) during the post-charging phase.

21. Engine according to one of the claims 2 to 20, characterised by the fact that it is equipped with an additional blower (63) or a mechanical compressor (64) driven by the engine output shaft.

22. Engine according to claim 21 comprising a mechanical compressor (64), characterised by the fact that the mechanical compressor (64) is a part of a high-pressure stage, comprising a cooler (74) and means (71, 72) for connecting this cooler (74) between the compressor outlet (73) and the air inlet (A) to the engine, such that the intake air permanently flows through the cooler (74), regardless of whether the mechanical compressor (64) is engaged or not.

23. Engine according to one of the claims 2 to 20, characterised by the fact that the inlet pipes are tuned for high engine speeds.
